# FASCICULE DE BREVET EUROPEEN

(11) **EP 2 618 285 B1**
(45) Date de publication et mention de la délivrance du brevet: **04.01.2017**
(21) Numéro de dépôt: 13000661.2
(22) Date de dépôt: 18.05.2004
(51) Int. Cl.: G06F 21/62, G06Q 10/10, H04L 29/06

(54) **Système de réseau informatique sécurisé pour la gestion de données personnelles**
Gesichertes IT-Netzsystem für die Verwaltung von personenbezogenen Daten
Secure computer network system for personal data management

(30) Priorité: 23.05.2003 CH 9292003
(43) Date de publication de la demande: 24.07.2013
(62) Demande divisionnaire de: 04733604.5
(73) Titulaire: Die Schweizerische Post AG, 3030 Bern (CH)
(72) Inventeur: Gobet. Jean, 1206 Genève (CH)
(74) Mandataire: Rüfenacht, Philipp Michael

(56) Documents cités:
- WO-A-02/05061
- DESWARTE Y ET AL: "Intrusion tolerance in distributed computing systems", PROCEEDINGS OF THE SYMPOSIUM ON RESEARCH IN SECURITY AND PRIVACY. OAKLAND, MAY 20 - 22, 1991; [PROCEEDINGS OF THE SYMPOSIUM ON RESEARCH IN SECURITY AND PRIVACY], LOS ALAMITOS, IEEE COMP. SOC. PRESS, US, vol. SYMP. 12, 20 mai 1991 (1991-05-20), pages 110-121, XP010024218, DOI: 10.1109/RISP.1991.130780 ISBN: 978-0-8186-2168-0

## Description

La présente invention concerne un système de réseau informatique sécurisé pour la gestion de données, notamment de données personnelles. L'invention concerne en particulier un système de réseau informatique sécurisé pour la gestion de dossiers médicaux dans un système de santé d'une région ou d'un pays.

Il existe de nombreux projets pour créer, développer et maintenir des réseaux de santé informatisés dans le but, entre autre, d'améliorer les prestations aux patients et de réduire les coûts des systèmes de santé. La mise sous forme électronique de données sur des patients dans les systèmes de santé actuels ont pour objectif général l'amélioration de l'un ou de plusieurs processus suivants: le flux administratif, notamment concernant le remboursement des prestations médicales; le partage et l'étouffement du dossier médical pour les médecins traitants, les hôpitaux et les cas d'urgence; et la prescription médicamenteuse notamment pour son adéquation au diagnostique et aux interactions pour limiter des erreurs de prescription, ainsi que sa diffusion chez le pharmacien ou à l'assurance pour son remboursement.

Dans les systèmes en vigueur ou sous forme de projets pilotes dans différents pays ou régions, on propose soit le stockage de certaines données sur le patient dans des cartes à puce, soit le stockage de données sur le patient sur un serveur centralisé, soit une combinaison des deux, les données sur le patient pouvant s'étendre à de simples données administratives (par ex. sur les assurances et la couverture sociale, ainsi que l'identification de la personne) jusqu'aux informations médicales du patient. Des systèmes de santé basés sur une carte à puce ou une centralisation de données informatiques d'un patient sont résumés ci-après:

### Carte SESAM- Vitale, France

Les habitants de France sont équipés d'une carte à puce, contenant des informations sur leur couverture sociale, informations utilisées pour la communication entre les patients, les médecins et les assurances.

### Réseau de santé social, France

Le réseau de santé social français permet une meilleure communication entre les patients et les assurances, et propose une messagerie sécurisée entre professionnels de la santé. Ce réseau sert de support à la carte à puce.

### Projet allemand

Le réseau allemand propose un dossier médical informatisé et des outils pour communiquer de manière sécurisée et pour soutenir le travail quotidien des médecins. Chaque patient est muni d'une carte de santé.

### Picnic, Danemark

Un réseau sécurisé, sur lequel peuvent se greffer des services tels que la messagerie sécurisée, est développé en open source et a pour but d'uniformiser les industries et les entreprises de télécommunications européennes.

### Rimouski, Québec

Une carte de santé expérimentale a été distribuée aux habitants de la région de Rimouski. Elle contenait toutes les informations médicales du patient (vaccins, allergies, médicaments).

### Laval, Québec

La même carte de santé expérimentale que celle de Rimouski a été distribuée aux habitants de Laval, mais l'architecture du réseau de données a été modifiée, avec un dossier patient centralisé.

### Hygelanet

Le réseau de santé crétois propose une meilleure communication du dossier médical informatisé du patient entre professionnels et une gestion des ressources médicales à distance.

### Projet slovène

Chaque habitant de Slovénie est équipé d'une carte de santé munie d'informations sur sa couverture sociale, ainsi que les médicaments prescrits et les informations d'urgence (vaccins, allergies, etc.).

### Projet danois

Ce projet a pour but d'enquêter et d'étudier les différents projets existant dans le pays, voir dans les pays nordiques, et d'en tirer des lignes fédératrices.

### Banque Carrefour

Ce projet belge propose un portail gouvernemental sur tous les services sociaux, y compris ceux de la santé, une identification unique et nationale des habitants belges et un transfert sécurisé de leurs données entre services pour éviter la re-saisie.

Un des désavantages principaux des systèmes basés sur le stockage de données, notamment de données sur le dossier médical d'un patient, sur une carte à puce, est que ces données peuvent être perdues. D'autre part, en cas d'urgence l'accès au dossier dépendra de la présence de la carte à puce. Un autre désavantage de stocker les données d'un dossier médical sur une carte à puce est que, même avec l'accord du patient, les professionnels de santé (fournisseurs de soins, pharmaciens, médecins, infirmières, hôpitaux et autres prestataires de services médicaux) n'ont pas accès aux données en tout temps.

Ces désavantages sont éliminés par le stockage des données concernant un patient sur un serveur d'un réseau informatique, accessible par les différents prestataires de service. Un désavantage majeur d'un tel système se situe au niveau de la sécurité et de la confidentialité des données sensibles. La protection des données personnelles, tel que les documents d'un dossier médical d'un patient, est importante non seulement vis-à-vis de tiers non autorisés mais également vis-à-vis d'utilisateurs autorisés qui abuseraient de leur droit d'accès à ces données, ou qui seraient négligents, et de par cette négligence permettraient à dès tiers de prendre connaissance des données.

Bien que les réseaux sécurisés et l'échange d'informations cryptées permettent de pallier les risques d'une entrée illicite dans un réseau informatique de santé et d'un accès illicite aux données personnelles stockées dans un serveur ou circulant sur le réseau entre utilisateurs, les abus ou la négligence vis-à-vis de ces données par un utilisateur autorisé restent un problème.

Au vu des inconvénients précités, un des buts de l'invention est de fournir un système de réseau informatique sécurisé pour la gestion de données qui permet d'assurer un niveau élevé de protection des données. En particulier, l'invention vise à fournir un système de réseau informatique sécurisé pour la gestion de données médicales dans un système de santé régional, national ou international.

Un autre but de l'invention est de fournir un système de réseau informatique sécurisé pour la gestion de données médicales personnelles, qui permet d'améliorer la qualité des informations accessibles aux utilisateurs autorisés d'une part, et d'autre part, de réduire les frais administratifs liés au traitement des données tout en offrant un haut niveau de protection des données vis-à-vis de tiers non autorisés, ou contre des abus ou négligences commis par des personnes autorisées.

Il est avantageux de fournir un système de réseau informatique sécurisé pour la gestion de données médicales personnelles dans un système de santé, qui permet un accès rapide aux informations d'un dossier médical.

Il est avantageux de fournir un système de réseau informatique sécurisé pour la gestion de données médicales personnelles où l'accès aux données constituant un dossier médical peut être défini de manière variable par rapport aux pièces accessibles et dans le temps pour chaque utilisateur autorisé.

Il est avantageux de fournir un système de réseau informatique sécurisé pour la gestion de données médicales, qui est flexible, de manière à assurer sa pérennité et la possibilité de s'intégrer à d'autres réseaux informatiques existants ou futurs.

Des buts de l'invention sont réalisés par un système de réseau informatique sécurisé pour la gestion de données confidentielles selon la revendication 1 et par un procédé de gestion de données dans un système de réseau informatique sécurisé selon la revendication 8.

WO 02/05061 A1 décrit les caractéristiques du préambule des revendications 1 et 18.

Dans la présente invention, un système de réseau informatique sécurisé pour la gestion de données protégées comprend au moins une infrastructure point d'accès reliée à travers un réseau de communication fédérateur fermé à une pluralité de systèmes serveurs consignataires de données, chaque système serveur consignataire de données comprenant au moins une base de données dans laquelle des données protégées constituant des documents médicaux sur des patients sont stockées, et un médiateur technique de service de consignation pour gérer l'accès aux documents stockés dans la base de données, différents documents formant un dossier médical relatif à une personne pouvant être distribués sur plusieurs des systèmes serveurs consignataires de données localisés sur des sites différents, l'infrastructure point d'accès comprenant au moins un médiateur d'accès aux dossiers sous forme d'un système serveur avec applications qui contrôle et gère l'accès d'utilisateurs aux documents stockés dans les systèmes serveurs consignataires de données.

Les revendications dépendantes décrivent d'autres aspects avantageux de l'invention.

Avantageusement, l'utilisation de plusieurs serveurs consignataires de données distribuées, pour le stockage de données d'un dossier médical, accessible au moyen d'un réseau fermé sécurisé (réseau fédérateur) permet d'assurer un haut niveau de protection des données du fait que même en cas d'entrée illicite (forcée) dans le système de réseau sécurisé, la récupération de données constituant un dossier médical nécessite une attaque sur une pluralité de serveurs protégés, et est donc extrêmement difficile. Les au moins deux niveaux de droit d'accès, c'est-à-dire l'autorisation d'accéder au réseau fédérateur et aux données personnelles d'un patient au moyen d'une carte à puce, et l'accès à différentes données d'un dossier médical spécifique, permettent de fortement réduire le risque d'utilisation abusive des données et de définir l'accès aux différents éléments du dossier en fonction du rôle et de l'identité de l'utilisateur autorisé. La journalisation des accès aux données et d'autres opérations sur les serveurs permet d'identifier et donc de prévenir les abus par des utilisateurs. L'accès aux données protégées est néanmoins possible en cas d'urgence par certains professionnels de santé tels que les hôpitaux et les médecins traitants, la sécurité étant fournie par le journal d'accès d'une part et, d'autre part, par la nécessité d'utiliser un moyen d'autorisation et d'authentification forte avec une carte à puce.

D'autres buts et aspects avantageux de l'invention ressortiront des revendications, de la description ci-après, et des dessins annexés dans lesquels:
La figure 1 est une représentation de l'architecture physique d'un système de réseau informatique pour la gestion de données selon l'invention;
La figure 1a est une représentation d'une partie de l'architecture physique selon une variante;
La figure 2 est une représentation de l'architecture logique d'un système de réseau informatique pour la gestion de données selon l'invention;
La figure 3 est une représentation de l'architecture logique d'un système de réseau informatique pour la gestion de données selon l'invention, basée sur une plate-forme J2EE (Java 2 Enterprise Edition);
La figure 4 est une représentation simplifiée de l'architecture physique de deux points d'accès d'un système de réseau informatique selon l'invention;
La figure 5 est une représentation de l'architecture logique d'une partie du système de réseau informatique selon l'invention, concernant l'accès aux services à valeur ajoutée;
La figure 6 est une représentation graphique de l'architecture logique d'une partie du système de réseau informatique selon l'invention, concernant un service à valeur ajoutée, dans l'exemple illustré un service d'aide à la prescription médicamenteuse;

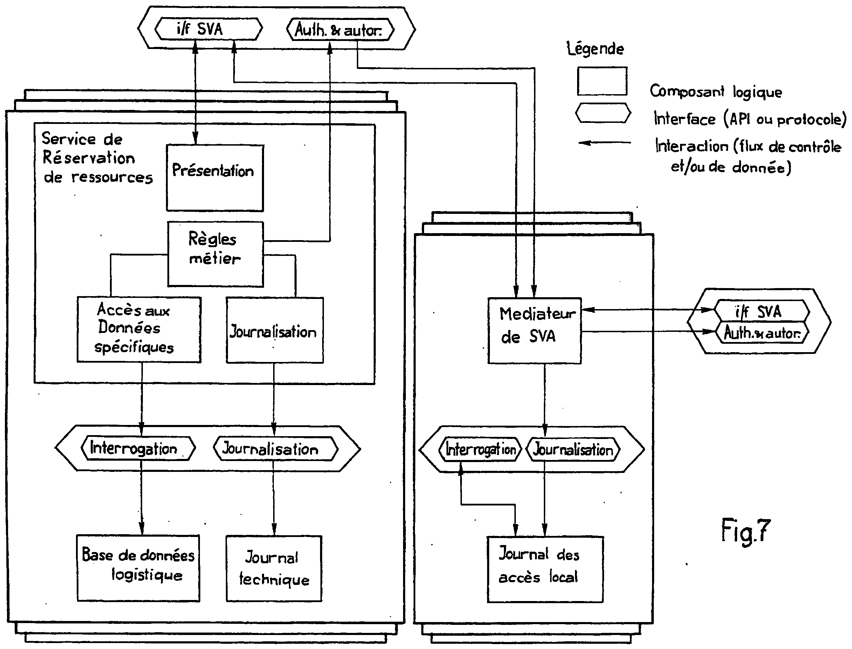

La figure 7 est une représentation de l'architecture logique d'une partie du système de réseau informatique selon l'invention, concernant un service à valeur ajoutée, dans l'exemple illustré une base de données logistique;
La figure 8 est un schéma montrant les actions principales de l'ouverture d'une session dans le système de réseau informatique; La figure 9 est un schéma illustrant les séquences d'actions dans la création (publication) d'un document en relation avec un patient, pour stockage dans le système de réseau informatique selon l'invention; La figure 10 est un schéma montrant les séquences d'actions dans la recherche de documents dans un système de réseau informatique selon l'invention;
La figure 11 est un schéma montrant la séquence d'actions pour la consultation d'un document stocké dans le système de réseau informatique; La figure 12 est un schéma montrant la séquence d'actions pour modifier des droits d'accès au système de réseau informatique ou à un dossier stocké dans le système; La figure 13 est un schéma montrant la séquence d'actions pour l'utilisation d'un service à valeur ajoutée, dans le cas d'espèce l'utilisation d'outils aidant la prescription médicamenteuse.

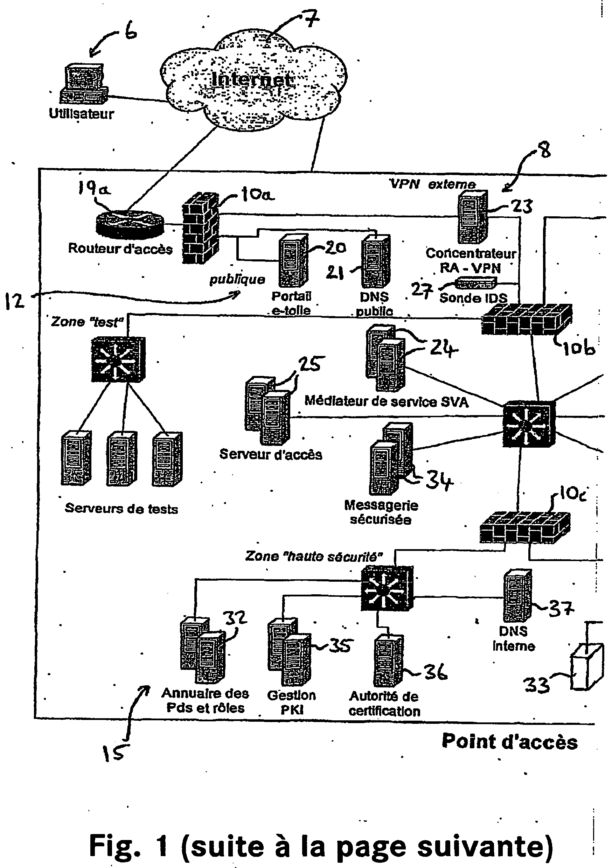

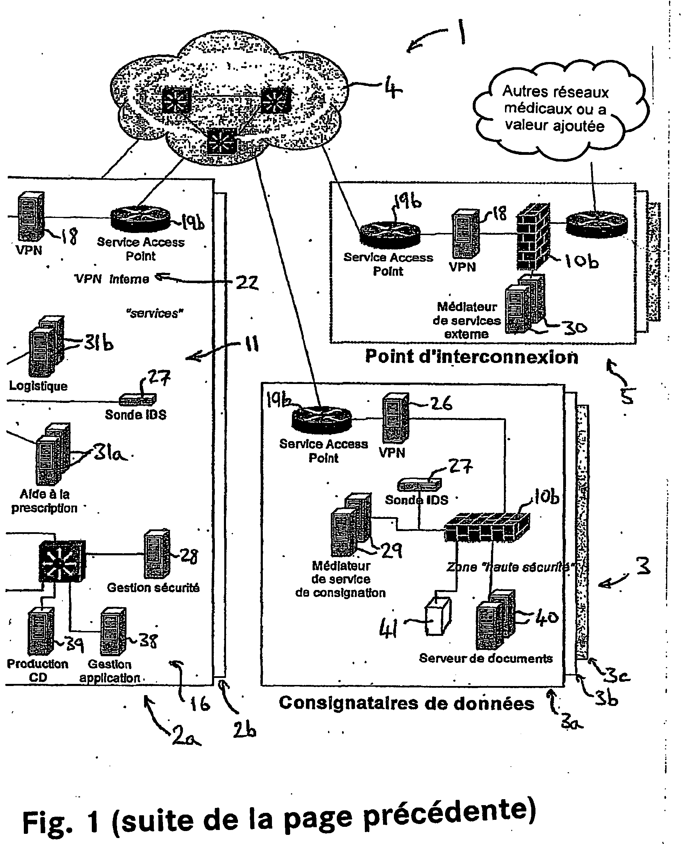

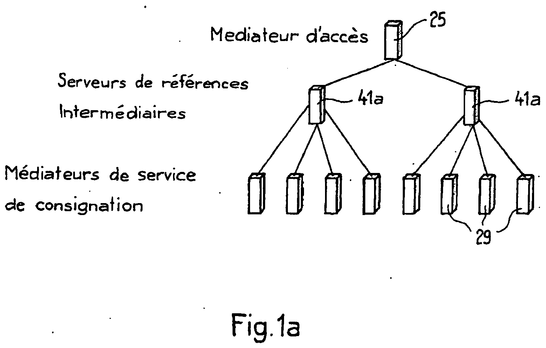

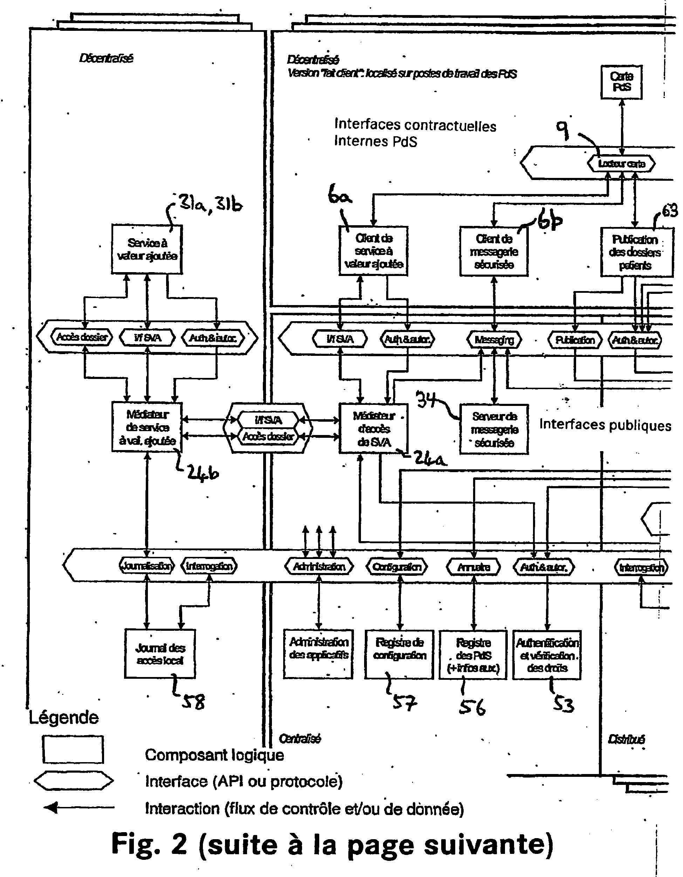

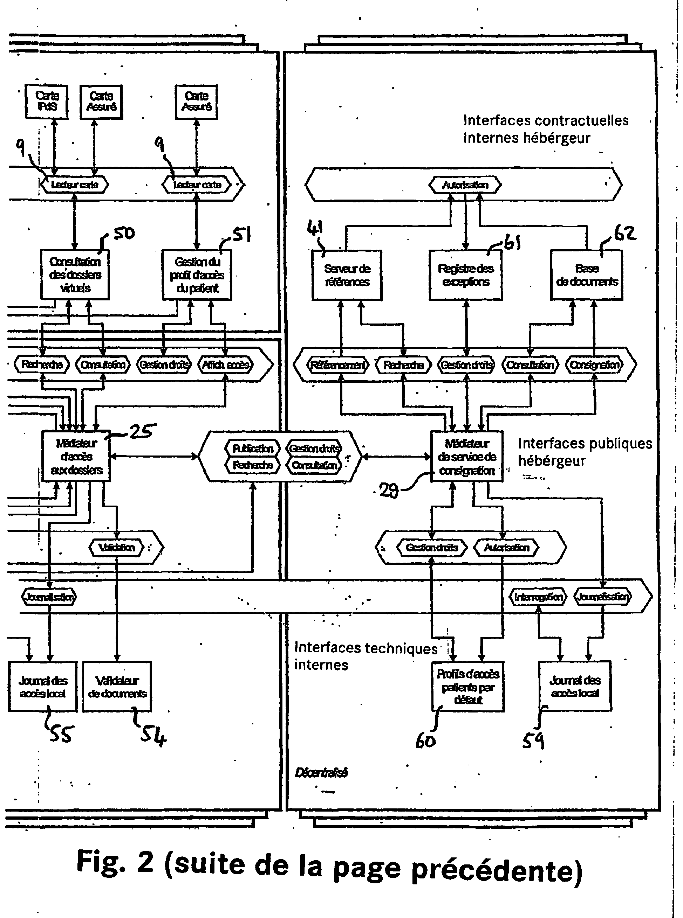

Faisant référence aux figures 1 et 2, un système de réseau informatique pour la gestion de données médicales personnelles (confidentielles) 1 (ci-après: système de santé informatisé) comprend au moins une infrastructure point d'accès 2a, 2b, une pluralité de systèmes serveurs consignataires de données 3a, 3b, 3c et un réseau de communication fédérateur 4 fermé reliant les infrastructures point d'accès aux systèmes serveurs consignataires de données. Les systèmes serveurs consignataires de données, ainsi que les infrastructures points d'accès, sont localisés sur des sites différents. La décentralisation des données, à la fois physiques (données réparties sur des bases de données différentes) et géographiques (bases de données localisées sur des sites différents), offrent un niveau important de protection des données.

Le système de santé informatisé peut en outre comprendre un ou plusieurs systèmes serveurs points d'interconnexion 5, reliés d'une part au réseau de communication fédérateur, et d'autre part à des réseaux informatiques externes, par exemple des réseaux informatiques d'autres systèmes de santé régionaux ou nationaux informatisés. Les utilisateurs 6 accèdent à l'infrastructure point d'accès 2a, 2b du système de santé informatisé par l'internet 7 en utilisant une connexion sécurisée, par exemple une connexion cryptée de type VPN (Virtual Private Network). Les utilisateurs peuvent être des professionnels de santé (médecins, infirmières, pharmaciens) ou des patients.

Chaque utilisateur est muni d'une carte à puce 8 et d'un code personnel (mot de passe) pour son authentification et l'autorisation à accéder au système de santé informatisé. Le poste à partir duquel l'utilisateur accède au système de santé informatisé doit donc être muni d'un lecteur de carte à puce 9. Ce lecteur peut prendre plusieurs formes, mais est de préférence compatible avec le standard PC/SC (Personal Computer/Smart Card) ou RSA afin d'assurer une interopérabilité avec tous les composants du système d'authentification (carte à puce, lecteur de carte à puce, interface, et application). Le lecteur peut être muni d'une double fente afin de permettre l'insertion de deux cartes, par exemple la carte d'un professionnel de santé, et une carte du patient lors de la consultation du dossier médical du patient. Ceci permet de rassurer le patient quant à la protection de ses données personnelles, notamment lors de sa première consultation avec le professionnel de santé.

La carte à puce 8 constitue un élément important de l'authentification de l'utilisateur, que ce soit le professionnel de santé ou le patient. Les données stockées dans une mémoire du microprocesseur de la carte comprennent un identifiant unique du détenteur de la carte, un certificat d'authentification, au moins une clé électronique privée, et des données administratives, telles que nom, prénom, date de naissance, numéro d'assurance ou de sécurité sociale, etc. La carte ne contient toutefois pas de données médicales. Lorsque la carte est connectée au lecteur de carte à puce, elle peut être déverrouillée par le code personnel de l'utilisateur. L'authentification de l'utilisateur sur le système de santé informatisé s'effectue par la transmission du certificat d'authentification. La clé privée stockée dans le microprocesseur de la carte à puce permet l'encryption et la signature de données échangées entre l'utilisateur et le système de santé informatisé. Pour des raisons de sécurité, plusieurs clés privées peuvent être stockées dans la carte à puce, une clé privée pour chacune des opérations d'authentification, de signature, de données et de chiffrement.

L'infrastructure point d'accès comprend une zone VPN externe 8 connectée au réseau internet 7 à travers un routeur d'accès 19a et un pare-feu 10a, une zone de service 11 reliée à la zone externe 8, à travers un pare-feu 10b, une zone de test 13 reliée à la zone externe 8 à travers un pare-feu 10b, une zone VPN interne 22 reliée à la zone de service 11 à travers un pare-feu 10b, une zone haute sécurité 15 et une zone de gestion 16 reliée à la zone de service 11 à travers un pare-feu 10c.

L'infrastructure point d'accès peut en outre comprendre une zone publique 12 reliée à l'internet 7 à travers un routeur d'accès 19a et un pare-feu 10a. La zone de service 11 est connectée à travers un pare-feu 10b et un routeur d'accès interne 19b au réseau de communication fédérateur 4 reliant l'infrastructure point d'accès 2a, 2b aux systèmes serveurs consignataires de données 3 et aux systèmes serveurs points d'interconnexion 5.

La zone publique 9 est indépendante de la partie interne du système de réseau sécurisé utilisé pour la gestion des dossiers patients. Elle contient un serveur Web 20 et un serveur de noms de domaines DNS (Domain Name Serveur) public 21.

Dans la zone de test 13, on effectue les tests d'intégration des divers composants du réseau avant l'intégration de ces composants dans le réseau. C'est aussi d'ici que les mises à jour sont lancées vers le réseau.

Dans la zone VPN externe 8, on établit toutes les connexions réseau en provenance des postes utilisateurs. C'est ici que se termine le tunnel sécurisé entre le poste utilisateur et l'infrastructure point d'accès. C'est ce tunnel qui permet un accès sécurisé et chiffré entre le poste d'utilisateur et le système de santé informatisé. C'est aussi ici que sont effectués les premiers contrôles d'accès au système et la première détection d'intrusion.

Depuis la zone VPN interne 22, on réalise tous les accès vers les composantes externes du réseau fédérateur 4, tels que l'accès aux systèmes serveurs consignataires de données 3 et aux systèmes serveurs points d'interconnexion 5 pour la connexion inter-réseaux. C'est d'ici que sont établis de nouveaux tunnels de communication sécurisés entre les médiateurs d'accès 25 et les composantes externes du réseau fédérateur 4.

Dans la zone services 11 sont situés tous les services dits "publics". Cette zone est accessible par les postes d'utilisateurs 6 pour leur permettre d'accéder aux divers services offerts par le système de santé informatisé.

Dans la zone haute sécurité 15 sont situés les services liés à la sécurité du réseau. Cette zone n'est accessible que par les serveurs qui hébergent les applications du système de santé informatisé, et par le personnel d'administration.

Dans la zone de gestion 16 sont situés tous les services liés à la gestion de l'infrastructure du système de santé informatisé. Cette zone n'est accessible que par le personnel d'administration responsable des opérations de gestion de l'infrastructure.

Des routeurs 19a, 19b sont utilisés pour connecter le réseau à d'autres réseaux où sont situés les divers intervenants. Ces routeurs sont placés sur la périphérie du réseau fédérateur 4, de l'infrastructure point d'accès, 2a, 2b, des systèmes serveurs points interconnexion 5, et des systèmes serveurs consignataires de données 3. Ils sont paramétrés pour offrir un premier niveau de protection des éléments du réseau sécurisé qu'ils connectent. Les routeurs déployés au sein du système de santé informatisé supportent les fonctions de filtrage de paquets, de consignation des événements et de détection d'intrusion au réseau.

Les pares-feu sont des machines qui permettent de protéger tout ou une partie d'un réseau en analysant le contenu des paquets, voire des sessions. Ces machines sont placées à l'intérieur du réseau, juste derrière le routeur 19a et sont un point de passage obligé pour entrer dans la partie du réseau qu'ils protègent.

Les pares-feu 10a, 10b, 10c déployés au sein du système de santé informatisé supportent les fonctions de filtrage de paquets, d'inspection de paquets, de consignation des événements; d'anti-virus et de défense active.

Trois types de pares-feu sont utilisés:
- Les pares-feu de périphérie 10a: ces machines sont utilisées dans tous les points d'accès. Elles sont situées entre le routeur de périphérie 19a et le concentrateur VPN 23 et permettent de protéger le réseau du système de santé d'attaques externes. Lors d'un accès "normal" au réseau du système de santé, ces machines ne peuvent pas inspecter le contenu des paquets car ceux-ci sont chiffrés dans un tunnel sécurisé (voir ci-après). Ces pares-feu sont paramétrés pour effectuer un contrôle au niveau des paquets (adresses et ports sources et destination). Les pares-feu de périphérie sont accédés par tous les postes d'utilisateurs 6 du système de réseau sécurisé ainsi que par tous les accès "publics" aux serveurs 20,21 de la zone publique 12.
- Les pares-feu internes 10b: ces machines sont utilisées sur toutes les parties du système de réseau sécurisé connectées au réseau fédérateur 4. Elles sont situées sur les parties du système qui communiquent avec le réseau fédérateur 4 et permettent d'inspecter les paquets en-dehors des tunnels sécurisés afin de protéger la partie publique du système accessible lors des sessions par les prestataires de soins ou les patients. Les pares-feu internes des systèmes serveurs d'interconnexion 5 sont accédés par des médiateurs techniques d'accès 25 et des médiateurs de services 24. Ils ne nécessitent pas de fonctions supplémentaires que celles énoncées ci-dessus. Les pares-feu internes des infrastructures points d'accès 2a, 2b sont accédés par tous les postes d'utilisateurs. Puisque les zones de services, de haute sécurité et de gestion utilisent des adresses IP (Internet Protocol) privées, ces pares-feu effectuent la traduction des adresses IP (NAT) (Network Address Translation) en plus des fonctions énoncées ci-dessus.
- Les pares-feu administratifs 10c: ces machines sont utilisées dans toutes les infrastructures points d'accès 2a, 2b. Elles sont situées au-delà de la zone de services 11 et permettent de protéger les zones de haute sécurité et de gestion 15,16. Les pares-feu administratifs 10c sont accédés par des médiateurs d'accès 25, les concentrateurs VPN 23 et le personnel responsable de l'exploitation de l'infrastructure du système de santé informatisé et de la gestion des clés électroniques publiques PKI (Public Key Infrastructure). Toutes les fonctions énoncées ci-dessus sont activées sur ces machines dont les paramètres sont contrôlés fréquemment afin d'assurer une très haute sécurité des zones qu'elles protègent.

Afin d'assurer la sécurité des sessions, des tunnels sécurisés (VPN) sont établis sur tous les liens du réseau qui ne sont pas sûrs. Ces tunnels VPN seront établis dans les cas suivants:
- accès au système de santé informatisé par un utilisateur 6;
- accès à un système serveur consignataire de données 3 depuis le réseau fédérateur 4
- accès à un système serveur point d'interconnexion depuis le réseau fédérateur 4.

Deux types de VPN sont présents dans le système de santé informatisé:
- VPN Utilisateur: ces VPN utilisent la technologie SSL (Secure Socket Layer) et sont établis entre un poste d'utilisateur 6 et l'infrastructure point d'accès 2a, 2b lors de l'accès au système de santé informatisé. Le protocole SSL est utilisé pour établir une session avec l'un des concentrateurs SSL 23 de l'infrastructure point d'accès. L'authentification avec le concentrateur VPN SSL 23 utilise le certificat d'authentification récupéré sur la carte à puce 8 de l'utilisateur.
- VPN interconnexion réseau 26: ces VPN utilisent la technologie IPSec ou la technologie SSL et sont établis entre les serveurs VPN internes des infrastructures points d'accès 2a, 2b et le serveur VPN 26 du système serveur consignataire de données 3 ou du système serveur d'interconnexion réseau 5. Ces tunnels sécurisés sont permanents entre deux sites et ne nécessitent pas d'authentification de la part des utilisateurs ou des médiateurs d'accès du fait que la communication s'effectue entre éléments de confiance à travers le réseau fédérateur 4.

Puisque seul le réseau fédérateur 4 qui transporte les données est jugé "non sûr", ce canal seul sera chiffré. L'établissement de ces VPN est authentifié par un certificat d'authentification délivré pour chaque système serveur consignataire de données et chaque infrastructure point d'accès.

Bien que de nombreux mécanismes de protection soient déployés au sein de l'infrastructure du système de réseau sécurisé, un système de détection d'intrusion (IDS-Intrusion Detection System) est installé dans l'infrastructure point d'accès afin de permettre une réactivité rapide en cas d'infraction. Une autre fonction importante de l'IDS, est de permettre de reconstituer et de tracer des événements en analysant les journaux et autres données collectées.

Ces IDS fournissent des services de détection, de consignation, d'alerte, de réaction et de synthèse vis-à-vis de toute tentative d'attaque ou d'intrusion au sein du système de réseau sécurisé. Ils peuvent s'interfacer avec d'autres IDS et posséder un langage permettant de définir des règles personnalisées. Les IDS comprennent des fonctions du type "réseau" (NIDS) et "machine" (HIDS).

L'architecture du système de détection d'intrusion est distribuée et redondante, et comprend les éléments suivants:
- Un système serveur de gestion de sécurité 28, comprenant un logiciel qui récupère l'ensemble des données émises par les sondes IDS 27 et centralise ces données pour les analyser et, le cas échéant, réagit afin d'avertir les opérateurs et/ou bloquer ces tentatives d'intrusion. Ce logiciel est présent dans la zone de gestion 16 de chaque infrastructure point d'accès 2a, 2b afin d'offrir un niveau de redondance adéquat. Tous les systèmes serveur de gestion de sécurité communiquent entre eux afin d'échanger les informations pertinentes et nécessaires au bon fonctionnement de l'ensemble.
- Des sondes IDS 27, qui sont des "sniffers" spécialisés qui analysent tous les paquets, protocoles et sessions qui transitent par l'équipement qu'ils surveillent. Les sondes sont présentes sur tous les équipements critiques du système de réseau sécurisé, en particulier sur le routeur externe 19 de l'infrastructure point d'accès et sur les paresfeu internes et externes. Les sondes 27 communiquent avec le système serveur de gestion de sécurité 28 le plus proche et remontent toutes les informations nécessaires à ce système serveur pour mener à bien sa mission.

La zone services 11 de l'infrastructure point d'accès 2a, 2b comprend un système serveur agissant comme médiateur technique d'accès (ci-après "médiateur d'accès") aux données protégées, notamment aux dossiers médicaux, le médiateur d'accès comprenant par exemple un serveur d'accès 25. Le médiateur d'accès matérialise le point d'entrée dans le système de santé informatisé des applications liées aux données confidentielles médicales réparties sur le réseau et utilisées par les professionnels de santé et les patients. Le médiateur d'accès 25 cache la structure interne du réseau et permet de garder le contrôle sur la sécurité et sur les interfaces exposées aux utilisateurs 6. Il convient de remarquer que le système de santé informatisé selon l'invention peut comporter plusieurs serveurs d'accès 25, par exemple chacun étant partagé par différents groupes d'utilisateurs. Pour simplifier l'exploitation des serveurs d'accès et augmenter leur efficacité et rapidité, il est cependant préférable qu'ils soient regroupés dans les infrastructures points d'accès 2a, 2b. Les serveurs d'accès ne stockent en mémoire essentiellement que des données techniques et non pas des données médicales, bien qu'ils puissent comprendre des caches techniques pour stocker temporairement certains résultats de recherche, tels que des adresses de serveurs et des données constituant le dossier médical d'un patient afin de pouvoir y accéder plus rapidement lorsqu'une session sur le réseau est ouverte par un utilisateur.

Cependant, une fois que la session est fermée, les données stockées dans cette cache sont supprimées/perdues.

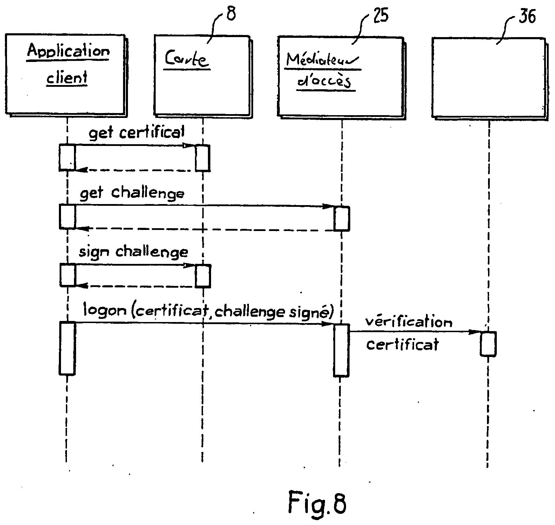

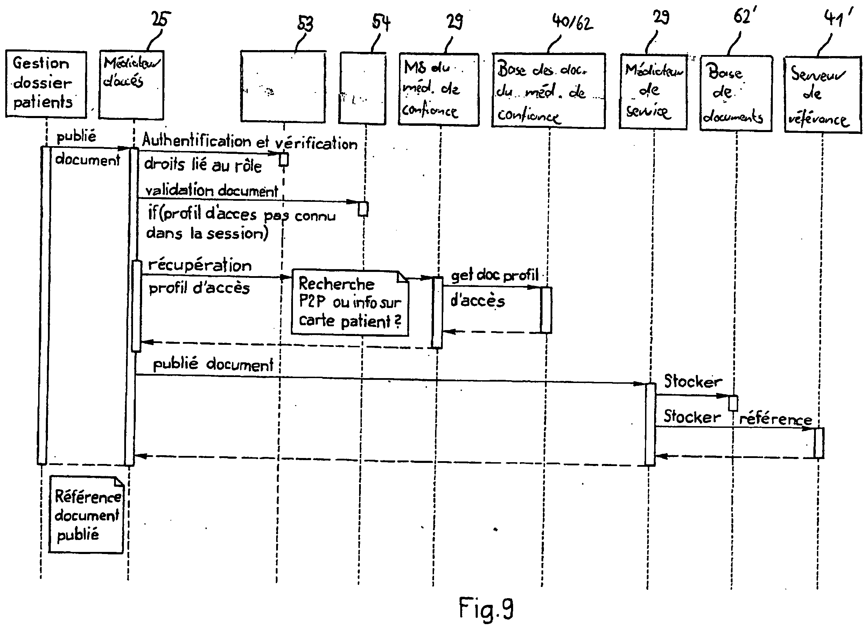

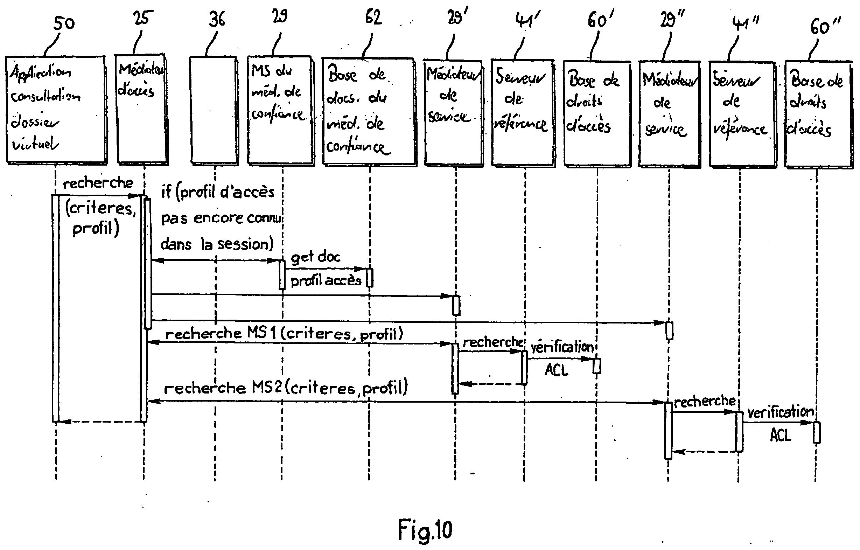

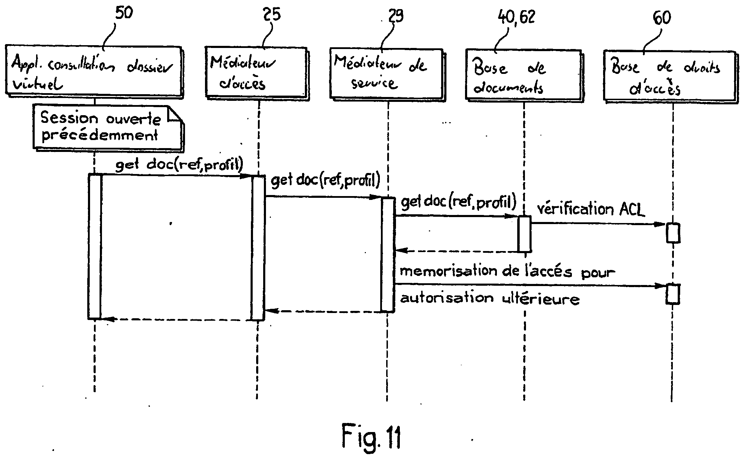

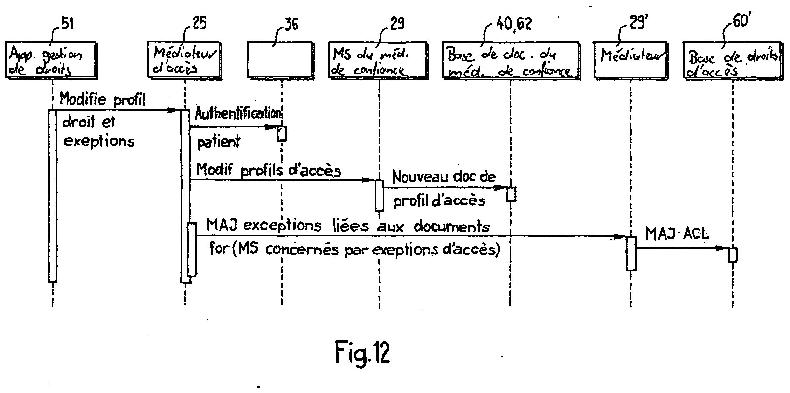

Les fonctions principales du médiateur technique d'accès 25 sont (voir les interactions sur la Fig. 2):
- authentification des utilisateurs, y compris vérification de la révocation éventuelle (voir aussi Fig. 8);
- autorisation: le médiateur d'accès effectue un premier niveau de filtrage des requêtes selon le rôle lié à l'identité de la personne effectuant une requête;
- gestion des sessions avec les utilisateurs, en particulier la récupération du profil d'accès du patient auprès d'un médiateur technique de service de consignation 29 dans un des systèmes serveur consignataire de données création et vérification de la validité des documents (format, encodage, attributs...) et transmission au système serveur de données consignataire du professionnel de santé concerné (voir aussi Fig. 9);
- recherche de données d'un dossier médical (voir aussi Fig. 10) sur demande d'une application de consultation, où le médiateur d'accès aux dossiers interroge l'ensemble des médiateurs de service de consignation en leur soumettant la requête de documents, puis collecte les réponses ou absences de réponse, consolide le résultat et le retourne à l'application ayant Initié la demande. Le résultat d'une recherche consiste en une liste de références vers des documents consultables; les documents dont l'accès n'est pas autorisé ne sont pas annoncés;
- consultation de données d'un dossier médical (voir aussi Fig. 11): à partir d'une référence précise fournie par une application de consultation, le médiateur d'accès aux dossiers 25 interroge le médiateur de service de consignation 29 concerné et récupère le contenu du document référencé; l'accès au document est journalisé par le médiateur d'accès;
- affichage des droits d'accès: sur demande d'une application de gestion du profil, le médiateur d'accès obtient le profil des droits d'accès du patient auprès d'un système serveur consignataire de données (par le système de recherche décrit précédemment), puis retourne ceux-ci à l'application ayant initié la demande;
- modification des droits d'accès (voir aussi Fig. 12): sur demande de l'application de gestion du profil, le médiateur d'accès aux dossiers 25 met à jour le profil d'accès stocké auprès du médiateur de service de consignation 29 du médecin de confiance du patient concerné;
- journalisation des accès: une trace de chaque requête est conservée localement par le médiateur d'accès aux dossiers ;
- recherche des traces des accès d'un patient donné, par interrogation des journaux applicatifs;
- administration: répond aux commandes définies par l'interface commune d'administration applicative.

Pour ce faire, le médiateur d'accès collabore avec plusieurs composants du système de réseau informatique sécurisé, les collaborations principales étant les suivantes:
- le médiateur d'accès est utilisé par les composants de gestion des dossiers patient, de consultation des dossiers virtuels 50 et de gestion des profils d'accès 51;
- le médiateur d'accès utilise les services de sécurité 53 pour l'authentification et les autorisations basées sur les rôles, grâce aux certificats contenus dans les cartes à puce du patient et du professionnel de la santé;
- le médiateur d'accès utilise le service de validation 54 des documents publiés;
- le médiateur d'accès accède à l'ensemble des médiateurs de service de consignation 29 pour la publication, la recherche, la consultation et la gestion des profils d'accès;
- le médiateur utilise le service de journal applicatif local 55;
- le médiateur d'accès accède à l'ensemble des journaux applicatifs pour reconstituer les accès au dossier d'un patient;
- le médiateur d'accès accède au registre (annuaire) des professionnels de santé 56 pour obtenir les informations nécessaires, telles que l'identifiant du consignataire du professionnel de santé ou son rôle;
- le médiateur d'accès accède aux informations, de configuration du système de santé informatisé 57, telles que l'adresse des consignataires.

La zone services 11 comporte en outre un système serveur agissant comme médiateur d'accès technique spécialisé 24 (ci-après médiateur d'accès spécialisé) qui matérialise le point d'accès pour des applications utilisateurs aux services électroniques à valeur ajoutée (ci-après services à valeur ajoutée ou SVA) tels que l'aidé à la prescription médicamenteuse faisant partie du système de santé informisé. Le système électronique d'aide à la prescription médicamenteuse 31 peut comprendre une base de données stockant sous forme électronique un compendium de médicaments et un logiciel pour déterminer l'adéquation d'une diagnose en fonction de l'interaction entre médicaments, d'allergies et d'autres conditions ressortant du dossier médical de patient. Le médiateur d'accès spécialisé 31 peut comprendre un serveur qui ne stocke essentiellement que des données techniques et a des fonctions suivantes:
- reçoit les requêtes provenant directement des logiciels utilisateurs, à travers un tunnel de communication sécurisé;
- authentifie l'utilisateur et autorise la requête selon les droits liés à son identité et à son rôle;
- transmet les requêtes au service à valeur ajoutée 31a, 31b auquel il est lié et retourne les réponses à l'utilisateur, il joue en cela un rôle classique de "proxy" pour le protocole du service à valeur ajoutée;
- sur demande du service à valeur ajoutée, interagit avec le reste du système de santé informatisé, notamment les médiateurs de services de consignation 29, afin d'obtenir des informations (par exemple dans le cas de l'aide à la prescription médicamenteuse);
- journalise localement les actions effectuées.

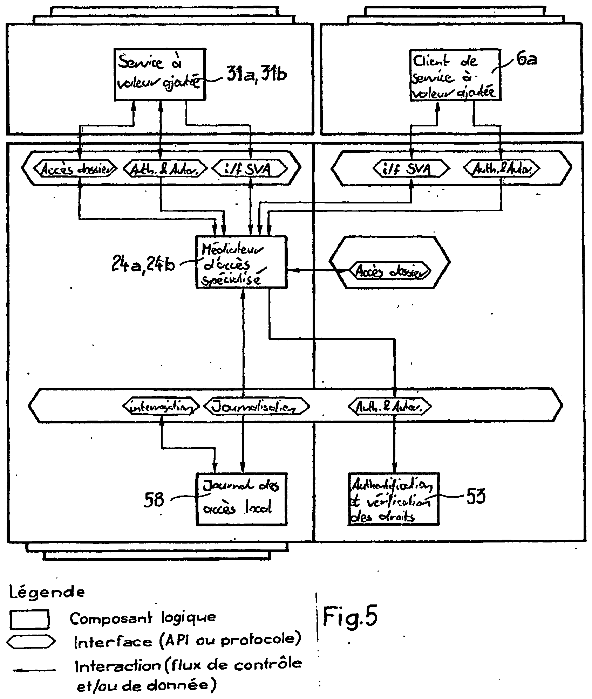

Aux fins précitées, le médiateur d'accès spécialisé interagit avec les utilisateurs et les autres composants du système de réseau informatique sécurisé selon les collaborations principales suivantes (voir Figures 2 et 5):
- le médiateur d'accès spécialisé est utilisé par les clients 6a de services à valeur ajoutée;
- le médiateur d'accès spécialisé appelle, et est appelé par, le service à valeur ajoutée 3 a, 31b auquel il est lié;
- le médiateur d'accès spécialisé 24 (24a, 24b) accède aux médiateurs de service de consignation 29 afin de rechercher et consulter des documents médicaux;
- le médiateur d'accès spécialisé utilise les services électroniques de sécurité 53 disposés dans la zone haute sécurité 15 pour l'authentification et les autorisations basées sur les rôles des utilisateurs;
- le médiateur d'accès spécialisé utilise le service électronique de journal d'accès applicatif local 58;
- le médiateur d'accès spécialisé accède à l'annuaire électronique 56 des professionnels de santé et des rôles disposés dans la zone haute sécurité, (tels que l'identifiant du système serveur consignataire de données 3a du professionnel de santé concerné);
- le médiateur d'accès spécialisé accède aux informations de configuration de l'infrastructure du système de réseau informatique sécurisé (telles que les adresses des systèmes serveurs consignataires), ces informations étant stockées dans un système serveur de gestion de l'infrastructure 33 dans la zone de gestion 16.

Les services à valeur ajoutée, tels que les bases de données des médicaments et le support logistique, peuvent être implémentés de manière centralisée car ils ne stockent pas d'informations relatives aux patients. Cette centralisation n'est toutefois que "logique", et n'exclut pas une décentralisation "physique"pour des questions de performance et d'accessibilité.

Au niveau architectural, ces services à valeur ajoutée peuvent donc être vus comme des boîtes noires du système de santé informatisé, ils sont mis à disposition des utilisateurs au travers d'un médiateur d'accès spécialisé réalisant la jonction entre le SVA et le reste du réseau.

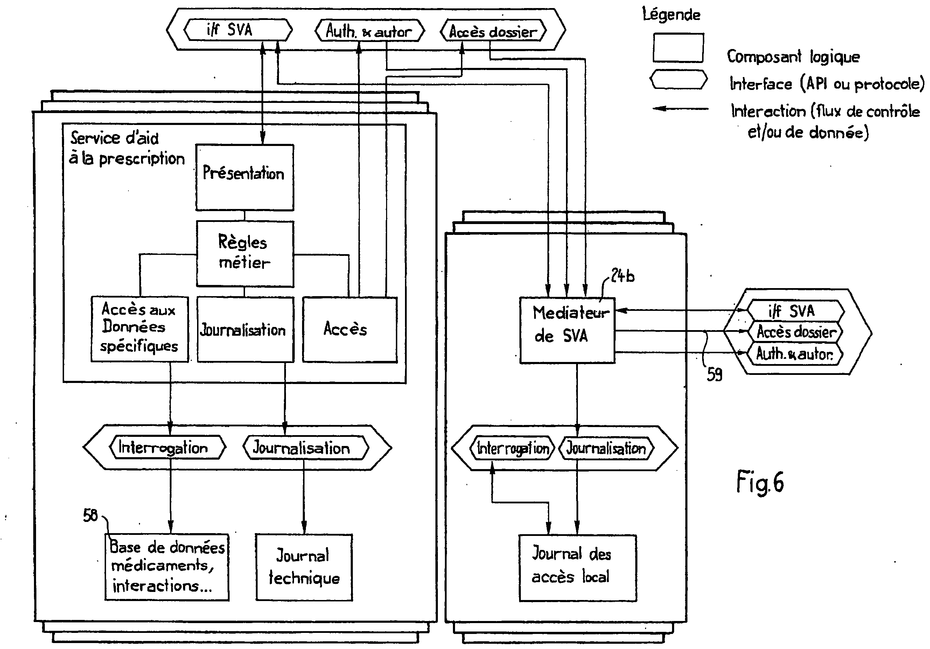

La figure 6 présente une architecture logique possible pour le service électronique d'aide à la prescription. Ce service est appelé à partir d'un médiateur de service à valeur ajoutée 24b, lui-même appelé par un médiateur d'accès spécialisé 24a (non représenté sur la figure 6).

Ce SVA possède des données propres, notamment une base de données des médicaments (compendium) 58 et des interactions potentielles entre ceux-ci.

De plus, le moteur de détection des interactions a accès 59 aux prescriptions en cours du patient.

Faisant référence aux Figures 1 et 2, la zone service 11 peut en outre comporter un serveur de messagerie sécurisé 34 utilisé principalement pour l'envoi de messages électroniques entres utilisateurs 6b du système de santé informatisé, ou pour la transmission et le stockage de données protégées, telles que les données médicales d'un patient, dans un système serveur consignataire de données 3a. Afin d'assurer la protection des données transmises, les messages électroniques sont signés avec la clé privée de la carte à puce du professionnel de santé et envoyés à une adresse correspondant à un autre acteur, par exemple 123456789 (a) e-toile.ch où 123456789 est l'identifiant de l'acteur. Le serveur mail n'accepte que les mails provenant du VPN, et dont la signature correspond à un professionnel de santé connu du système de réseau sécurisé. Le professionnel de santé peut donc ajouter un message en tant que document rattaché au patient dans la base des documents du système serveur consignataire de données du professionnel de santé émetteur.

La zone haute sécurité 15 comporte un système serveur 32 comprenant un annuaire électronique de professionnels de santé 57 (ci-après annuaire des PDS) utilisé pour autoriser les accès d'utilisateurs en fonction de leurs rôles, un système de gestion de certificats électroniques 35 (ci-après gestionnaire PKI), qui stocke et gère les certificats électroniques et les listes de révocation de certificats qui ont été émis, et une autorité électronique de certification 36 (ci-après autorité de certification) qui agit comme autorité de certification de l'organisation du système de santé informatisé. Dans le cas où la production des cartes à puce est sous-traitée à une organisation externe, le système de gestion de certificat électronique 35 et l'autorité électronique de certification 36 peuvent se trouver à l'extérieur du système de réseau informatique sécurisé dans un système sécurisé externe, sous contrôle de l'organisation responsable de la production des cartes à puce.

La zone haute sécurité 15 peut en outre comprendre un serveur de nom de domaine interne (ci-après DNS interne) 37 pour gérer les noms des hôtes internes. Chacun des composants de la zone haute sécurité peut être fourni sous forme de système serveur. Le système serveur de l'annuaire des PDS 32 a le rôle principal de répertorier les professionnels de la santé affiliés au système de santé informatisé et de regrouper les informations nécessaires à leur sujet. Le système serveur de l'annuaire des PDS 32 stocke essentiellement des données administratives, telles que nom, prénom, adresse, spécialité, etc. du professionnel de santé, des certificats numériques de chaque professionnel de santé, des informations sur les rôles et/ou les autorisations sur les professionnels de santé, et les adresses ou d'autres informations sur le système serveur consignataire de données 3a associées à l'utilisateur. Les fonctions principales de l'annuaire des professionnels de santé sont les suivantes:
- création d'une nouvelle entrée dans l'annuaire;
- modification des attributs d'une entrée existante;
- désactivation d'une entrée;
- recherche et consultation d'entrées dans l'annuaire;
- importation et exportation par lots;
- via interface homme-machine (IHM) d'administration: établissement de listes et de rapports; administration: répond aux commandes définies par l'interface commune d'administration applicative.

L'annuaire des professionnels de santé 57 est utilisé par le service de messagerie sécurisé 34 afin d'obtenir la clé publique du destinataire d'un message chiffré. Les médiateurs d'accès 25 utilisent aussi l'annuaire afin d'autoriser les requêtes selon le rôle d'un professionnel de santé.

Le gestionnaire PKI 35 peut être un produit standard du marché, pour la production, la distribution, la révocation et la vérification des certificats électroniques.

Le système serveur d'autorité de certification 36 a le rôle d'authentifier un utilisateur du réseau et d'autoriser certaines requêtes en fonction de son rôle.

Le système serveur d'autorité de certification stocke essentiellement des données sur les certificats de l'autorité de certification ayant émis le certificat des cartes à puce des utilisateurs ainsi que des listes de révocation ou d'accès.

Les fonctions principales de l'autorité de certification 36 sont les suivantes:
- contrôle de l'authenticité du certificat présenté;
- vérification des listes de révocation; vérification des autorisations liées au rôle d'un utilisateur;
- si nécessaire: établissement du contexte de sécurité de la session;
- administration: répond aux commandes définies par l'interface commune d'administration applicative.

L'autorité de certification est surtout utilisée par les médiateurs d'accès 25 ou les médiateurs d'accès spécialisés 24. Il est à remarquer que les données des listes de révocations peuvent aussi être stockées sur d'autres serveurs, et dans ce cas l'autorité de certification 36 accédera à ces serveurs afin de vérifier la liste des révocations.

La zone de gestion 16 comprend un système serveur pour la gestion de l'infrastructure 33 du système de santé informatisé qui permet l'exploitation de l'infrastructure du réseau informatique en fournissant les services électroniques suivants:
- surveillance des événements critiques (pannes, surcharge, dépassement de capacité...);
- historique centralisé des événements historique de l'utilisation du trafic réseau;
- centralisation des configurations réseau;
- centralisation des images des serveurs (du type Ghost);
- génération d'alarme en cas d'événements critiques; possibilités de distribution de mises à jour;
- gestion des alarmes par équipement et notification des plus sévères vers le TTS (Trouble Ticketing System) du Help Desk;
- gestion de l'inventaire des équipements et des versions logicielles déployées.

La zone de gestion 16 comprend en outre un système de gestion électronique d'application 38 pour administrer et gérer les applications du système de santé informatisé, notamment l'administration des applicatifs et la gestion de la configuration des différents composants et applications du système, ainsi que la télédistribution aux postes-clients (voir aussi sous serveur de déploiement).

Comme décrit auparavant, la zone de gestion 16 peut également comprendre un système serveur de gestion de sécurité 28 pour reconstituer ou tracer des événements en analysant les journaux et d'autres données collectées par les sondes de détection d'intrusion 27 installées sur les points critiques du système de santé informatisé.

La zone de gestion peut également comprendre un système de production 39 de disques compacts ou d'autres supports pour fournir le dossier aux patients qui en font la demande, quand ils vont à l'étranger par exemple.

Le système de gestion d'infrastructure 33 comprend un registre de configuration 57 qui conserve les informations communes concernant la configuration logique et physique du système de santé informatisé. Les données stockées dans ce registre comprennent en outre, les adresses des médiateurs, des services à valeur ajoutée, et des services communs tels que les journaux. Le registre qui est accessible par tous les composants internes du système de santé informatisé a les fonctions:
- recherche d'un élément de configuration et accès à sa/ses valeur (s);
- importation et exportation par lots;
- dans la mesure du possible: découverte automatique de certains éléments (par exemple médiateurs) entrant dans la configuration;
- via IHM ou interface d'administration: création d'une nouvelle entrée dé configuration, modification ou effacement d'une entrée existante, production de listes;

Il est à remarquer que la configuration privée propre à chaque composant applicatif du système de santé informatisé n'est en principe pas conservée dans le registre de configuration, mais par un mécanisme local ad hoc.

Le système serveur de gestion d'applications 38 qui permet l'exploitation et le pilotage des composants applicatifs du système de santé informatisé, peut avoir les fonctions suivantes:
- interrogation et affichage de l'état des composants (automatiquement et sur demande de l'opérateur);
- démarrage et arrêt des composants modification des paramètres de fonctionnement des composants (si ceux-ci le permettent);
- détection de problèmes et annonce aux opérateurs; collecte et affichage de statistiques (par exemple temps de réponse, compteurs);
- échéancier d'actions sur les composants (par exemple démarrage automatique de tâches de fond pour la maintenance ;
- action automatique en fonction de certains événements (e. g. redémarrages en cas d'erreur ;

La zone de gestion 16 peut également comprendre un serveur de déploiement qui met à disposition des professionnels de santé des logiciels mis à jour permettant d'accéder aux services du système de santé informatisé.

Dans la zone publique 9, le système serveur portail d'informations (serveur Web) a le rôle principal de fournir des informations au public et aux professionnels de santé. Ce système serveur stocke des données HTML statiques et des données structurées selon les besoins, ce serveur communiquant avec la zone d'administration 16, notamment le système serveur de gestion d'infrastructure 33 et de gestion et d'application 38 afin d'obtenir l'état du système. Les fonctions principales du système serveur portail d'informations 20 sont:
- diffusion des informations statiques de base (historique, mission, modes d'emploi, adresses de contact, etc.);
- diffusion des informations de services (état du système, dérangements, fenêtres de maintenance, annonces, événements, etc.).

Le système serveur portail est accessible sans connexion VPN.

Le système serveur consignataire de données 3 qui est connecté au réseau fédérateur 4 par un routeur interne 19b et un tunnel sécurisé VPN interne 26 à travers un pare-feu interne 10b, comprend un système serveur agissant comme médiateur technique de services de consignation 29 (ci-après médiateur de services de consignation) et un serveur de documents 40. Le médiateur de services de consignation 29 gère les accès aux données conservées dans le serveur de documents 40 sur appel des médiateurs d'accès 25, 24 afin d'accéder aux différents composants du système serveur consignataire de données 3. Le médiateur de services de consignation accède également aux services de journalisation locale 59 afin de conserver une trace de toutes les opérations effectuées par un ou plusieurs composants du système serveur consignataire de données. Les fonctions principales du médiateur consignataire de données sont les suivantes :
- publication: reçoit un document à publier de la part du médiateur d'accès aux dossiers 25 et le confie au serveur de documents 40 pour stockage; crée et stocke également sur le serveur 40 la référence unique de chaque document d'un patient;
- lors de la publication du premier document d'un patient sur le consignataire concerné: création du dossier et du profil d'accès du patient;
- recherche: sur réception d'une requête de recherche de documents d'un médiateur d'accès aux dossiers, le médiateur de service de consignation recherche auprès du serveur de documents 40 les références de documents correspondant aux critères de recherche; vérifie et retourne les résultats au médiateur d'accès aux dossiers;
- vérifie la bonne application des droits d'accès;
- consultation de documents: sur réception d'une requête de consultation de document d'un médiateur d'accès aux dossiers, le médiateur de service de consignation vérifie, si nécessaire, la référence (e. g. est-elle bien formulée et toujours valide), vérifie les droits d'accès applicables, et obtient le document auprès du consignataire;
- vérification des droits d'accès par rapport aux profils d'accès et aux exceptions spécifiées par le patient;
- mise à jour des profils d'accès par défaut des patients (non spécifiques à un document);
- mise à jour des exceptions (spécifiques à un document) dans les droits d'accès;
- journalisation des requêtes;
- gestion des erreurs du consignataire: dans la mesure du possible, le médiateur de service de consignation protège le reste du réseau contre les erreurs du consignataire (y compris traitement des time-outs éventuels); administration: répond aux commandes définies par l'interface commune d'administration applicative.

Il est à noter que chaque médiateur consignataire de données ne connaît que les documents qu'il gère et les patients pour lesquels il a un document, le dossier complet d'un patient pouvant donc être distribué sur une pluralité de consignataires de données évitant ainsi le stockage d'un dossier médical complet sur un seul serveur ou registre central. Ceci augmente fortement la protection des données médicales d'un patient compte tenu du fait qu'il est extrêmement difficile pour un tiers de franchir une pluralité de systèmes sécurisés afin de reconstituer le dossier complet.

Pour des questions de performance, le médiateur de consignation de services est de préférence physiquement proche du serveur de références 41 et du serveur de documents 40. Le rôle du serveur de références est de permettre de retrouver, sur la base de critères de recherche, les références sur les documents consignés. Les données stockées sur le serveur de références sont essentiellement les références aux documents stockés dans le serveur de documents 40. les attributs de ces documents et les indexes.

Le serveur de références peut également comprendre, ou tout au moins accéder à, un registre (base) des droits d'accès 60 spécifiques aux documents, ce registre se trouvant de préférence dans au moins un système serveur consignataire de données 3, notamment le système serveur consignataire du médecin de confiance du patient.

Les fonctions principales du serveur de références 41 sont les suivantes: stockage des références aux documents; 'stockage des attributs nécessaires aux recherches; création et gestion des indexes nécessaires aux recherches; 'recherche de références avec des critères basés sur les attributs (identité du patient, type de document, date...), en tenant compte des restrictions d'accès édictées par le patient.

Il est à remarquer que le serveur de références 41 pourrait être intégré ou faire partie du serveur de documents 40, ou tout au moins partager les mêmes structures de données.

Lors de la recherche de documents (voir aussi Fig. 10), un médiateur d'accès aux dossiers interroge tous les médiateurs de service de consignation et attend de chacun d'eux une réponse positive ou négative. Cela conduit à charger le réseau, le médiateur d'accès (qui doit gérer un grand nombre d'interlocuteurs simultanément), et chaque médiateur de service qui doit répondre à chaque requête qui lui parvient. Cela constitue le risque que les performances des opérations de requête sont inférieures au seuil d'acceptabilité, et que l'augmentation, à terme, du nombre de consignataires de service (et donc du nombre de médiateurs de service et des serveurs de référence) dégrade les performances globales du réseau.

Dans l'optique de prévenir ces problèmes potentiels, il est possible de mettre en place des serveurs de références intermédiaires, indexant l'existence de documents ou, plus largement, d'un dossier relatif à un patient dans un consignataire particulier, tel que montré dans la figure 1a.

Le registre des droits d'accès spécifiques aux documents 61 à le rôle de gérer la liste des exceptions d'accès, notamment celles qui sont requises par le patient. Ce registre peut être intégré au serveur de références en utilisant les mêmes structures de données que celui-ci, mais pourrait également être une entité distincte du serveur de références. Le registre des droits d'accès spécifiques aux documents 61 (aussi appelé "registre des exceptions") a les fonctions principales suivantes:
- stockage des exceptions autorisant l'accès par des personnes spécifiques à certains documents;
- recherche de ces exceptions avec les critères sur le patient, le professionnel de santé, le document ou autres données associées au dossier médical.

Les interactions du registre des droits d'accès spécifiques 61 aux documents sont principalement les suivantes:
- consultation par le médiateur de service de consignation 29 lors de la recherche et de la consultation de documents;
- mise à jour par le médiateur de service de consignation dans le cadre de la gestion des droits par le patient;
- le médiateur de service de consignation enregistre une nouvelle exception la première fois qu'un professionnel consulte un document afin de lui garantir l'accès ultérieur même en cas de modification des restrictions par l'utilisateur;
- collaboration avec les autres composants du consignataire pour les opérations de maintenance (e. g. préservation de l'intégrité référentielle en cas d'effacement de documents).

Le système serveur de documents 40 a le rôle de stocker de manière fiable et pérenne les documents du dossier médical d'un patient. Les données stockées sur la base de données de ce serveur peuvent être chiffrées ou non. Les fonctions principales du système serveur des documents sont les suivantes:
- il accepte et stocke les nouveaux documents;
- il délivre, sur présentation de leur référence, les documents demandés pour consultation;
- Il efface les documents obsolètes, selon les règles édictées par l'administrateur du système;
- il importe et exporte de documents (isolément ou par lots);
- éventuellement: il gère le versionnage de documents;

Le médiateur consignataire de données 29 accède à la base de documents du serveur de documents 40 lors de la publication, la recherche et la consultation de documents, tel que montré dans les figures 9,10 et 11.

Dans la présente demande, on utilise le terme publication concernant les documents de dossiers pour l'opération de création et de stockage des documents sur un serveur de documents, le mettant à disposition des utilisateurs du système de santé informatisé. Afin de pouvoir publier le dossier patient, le système de santé informatisé comprend une application de publication 63 de dossiers patients qui génère et stocke les nouveaux documents selon la procédure telle que illustrée dans la figure 9. L'application de publication accède aux certificats et aux fonctions de la carte à puce 8 via le lecteur 9 de carte à puce et délègue toutes les requêtes du réseau au médiateur d'accès aux dossiers 25 de l'infrastructure point d'accès 2a, 2b.
- Les fonctions principales de cette application sont les suivantes:
- authentification du professionnel de santé au moyen de sa carte à puce;
- transmission sur le réseau des documents à publier (les documents préparés localement, soit par des applications dédiées, soit par des outils bureautiques conventionnels);
- éventuellement: conservation de la liste des documents publiés et de leurs références dans le système de réseau sécurisé;

Il est à remarquer que la carte à puce du patient n'est pas nécessaire pour publier des documents, mais l'identifiant du patient l'est. L'application ne permet pas de modifier les documents publiés, afin d'éviter des abus, et en cas de modification il est nécessaire de faire de nouvelles versions des documents.

L'application pourrait être implémentée par un interface graphique GUI (Graphical User Interface) classique, ou par un serveur de présentation WEB accédé par un browser. Le système de santé informatisé comprend également une application de consultation des dossiers 50 afin de permettre à un professionnel de santé ou à un patient de consulter son dossier stocké dans les différents systèmes serveurs consignataires de données, selon les autorisations et le profil d'accès.

Cette application accède aux certificats et aux fonctions de la carte à puce via le lecteur de carte à puce et délègue toutes les requêtes au médiateur d'accès aux dossiers 25 dans l'infrastructure point d'accès 2a, 2b. Cette application peut également collaborer avec des applications externes pour visualiser certains types de documents (par exemple Acrobat, viewer graphic). Comme pour l'application de publication, cette application de consultation pourrait être implémentée par un client GUI classique ou par un serveur de présentation WEB accédé par un browser.

Les fonctions principales de l'application de consultation des dossiers sont les suivantes:
- authentification du professionnel de santé et du patient au moyen de leurs cartes à puce;
- recherche des références de documents constituant le dossier virtuel du patient, d'après des critères à définir (type de document, date de publication, origine...);
- consultation: recherche et affichage de documents sélectionnés parmi les références retournées par la recherche;
- impression d'un document affiché, avec inclusion des informations de traçabilité; éventuellement: stockage des références de documents déjà consultés.
- accès aux informations en cas d'urgence sans la carte du patient (mais toujours avec la carte du professionnel).

Une autre application séparée ou Intégrée dans l'application d'une publication des dossiers patients est une application de validation de documents 54 qui assure que les documents publiés satisfont aux exigences du réseau sécurisé.

Cette application est utilisée par le médiateur d'accès aux dossiers 25 lors d'une publication et a les fonctions principales suivantes:
- vérification de conformité (format, encodage, syntaxe, règles structurelles, taille);
- complètement, le cas échéant, des attributs du document;
- administration: répond aux commandes définies par l'interface commune d'administration applicative;

Une application importante du système de santé informatisé est l'application de gestion du profil d'accès 51 permettant à un patient de gérer son profil de droit d'accès et de visionner le journal des accès effectués sur son dossier. Cette application accède aux certificats et aux fonctions de la carte à puce 8 via le lecteur de carte 9 et délègue toutes les requêtes au médiateur d'accès aux dossiers 25. Cette application pourrait être implémentée par un GUI classique ou par un serveur de présentation WEB accédé par un browser. Les fonctions principales de l'application de gestion du profil d'accès 51 sont les suivantes:
- authentification du patient au moyen de sa carte à puce;
- recherche et affichage du profil de droits d'accès du patient;
- modification du profil de droit d'accès et mise à jour de celui-ci sur le réseau;
- recherche (dans les journaux) des accès au dossier du patient effectués dans une période donnée, puis affichage des résultats;
- renouvellement du certificat de la carte à puce : une application cliente du réseau sécurisé doit avoir la fonction de renouveler le certificat inscrit dans la carte à puce. L'application de gestion du profil d'accès peut donc avoir cette fonction;

Le profil d'accès d'un patient est stocké dans un registre de profils d'accès 60 (aussi appelé base de droits d'accès) qui est de préférence stocké dans un médiateur de services de consignation 29 de manière décentralisée pour augmenter les difficultés d'accès illicite aux restrictions d'accès aux documents.

Au lieu de stocker le registre de profils d'accès sur le médiateur de services de consignation 29, on peut également le localiser sur le serveur de documents 40 dans lequel le document concerné est stocké. Ce registre est utilisé par le médiateur de services de consignation sur demande du médiateur d'accès aux dossiers 25 lors de l'initialisation d'une session ou dans le cadre de la gestion des droits d'accès du patient. Les fonctions principales du registre des profils d'accès sont les suivantes:
- création d'un profil d'accès lors de la première visite du patient;
- modification des restrictions d'accès;
- effacement d'un profil d'accès d'un patient donné;
- sélection du profil d'accès d'un patient donné;
- administration: répond aux commandes définies par l'interface commune d'administration applicative.

L'accès par un professionnel de santé à des documents publiés sur le réseau du système de santé informatisé est subordonné à la vérification avec trois niveaux de contrôle. Le premier niveau correspond ou rôle de l'émetteur d'une requête. Celui-ci peut-être par exemple médecin, infirmier, pharmacien, et est lié à certaines autorisations d'accès aux fonctions du réseau. Un infirmier pourrait par exemple consulter mais pas publier. Le deuxième niveau est constitué du profil d'accès défini par le patient. Celui-ci permet par exemple d'interdire l'accès à tous les dossiers et documents de type gynécologie aux professionnels traitants mais l'autoriser aux médecins de confiance. Le troisième niveau est matérialisé par des exceptions spécifiques à des médecins et des documents ou dossiers particuliers. Il est par exemple possible d'autoriser l'accès du compte-rendu de la visite gynécologique à une date spécifique au Docteur X, médecin traitant mais pas de confiance.

Ces deuxième et troisième niveaux sont donc traités de pair afin d'autoriser un accès interdit par le deuxième niveau, mais autorisé à titre exceptionnel par le troisième.

Une solution consiste à conserver le profil d'accès auprès du consignataire de données du médecin de confiance, et à avoir des listes d'accès ACL (Access Control List) pour chaque document, ces ACL ne comportant que les exceptions d'accès, pas le profil lui-même.

Afin d'exercer les contrôles d'accès liés au profil, le médiateur d'accès aux dossiers 25 doit le fournir aux médiateurs de service de consignation 29 lors de chaque requête. Pour une requête de recherche (voir Figures 2 et 10), le médiateur d'accès aux dossiers doit donc récupérer le profil d'accès dans la base des droits d'accès 60 auprès du médiateur de consignation 29 du système serveur consignataire de documents du médecin de confiance, avant d'interroger toutes les bases des droits d'accès 60', 60 "des autres médiateurs de consignation 29', 29". Afin d'éviter cette sous-requête supplémentaire à chaque requête du logiciel client, le médiateur d'accès 25 peut garder le profil d'accès de manière temporaire dans les informations de session.

La modification du profil d'accès (voir aussi Fig. 12) par le patient implique uniquement la mise à jour du profil stocké par le consignataire de document du médecin de confiance, sans modification des ACL de tous les documents.

Une autre solution pour réaliser la stratégie de contrôle d'accès, serait que l'ACL de chaque document inclut le profil d'accès défini par le patient, de manière à ce que le respect de l'ACL seul suffise à exercer les deuxième et troisième niveaux 2 et 3 de contrôle. Le profil d'accès quant à lui est toujours stocké auprès du système serveur cosignataire de données du médecin de confiance. Lors de la mise à jour du profil, il faut alors mettre à jour le profil stocké dans le consignataire de documents du médecin de confiance, et modifier toutes les ACL de tous les documents déjà publiés.

Faisant référence aux figures 1,2 et 8, l'ouverture d'une session par une application utilisateur s'effectue après l'établissement du tunnel sécurisé VPN entre le poste du professionnel de santé 6 et l'infrastructure point d'accès 2a, 2b. Etant donné que l'établissement du VPN implique l'authentification du serveur VPN 23 par l'utilisateur et que l'ensemble des serveurs situés au sein de l'infrastructure point d'accès peut être considéré comme sûr, il n'est pas nécessaire que l'application utilisateur authentifie de nouveau les serveurs auxquels elle s'adresse (un médiateur d'accès par exemple).

En revanche, il est nécessaire d'identifier et d'authentifier l'utilisateur auprès du serveur d'autorité de certification 36 (aussi appelé "serveur sécurité") afin que celui-ci connaisse l'identité de la personne ouvrant une session applicative et effectue des actions selon cette identité et les droits associés.

Un professionnel de santé est rattaché à un système serveur consignataire de données 3a, 3b, 3c spécifique qu'il peut choisir. Lors de la publication d'un document, celui-ci est stocké dans ce système serveur consignataire de données après avoir passé différents niveaux d'autorisations et de validation, tel que montré dans la figure 9.

La figure 10 illustre le déroulement d'une requête de recherche de documents qui met en oeuvre deux mécanismes très importants:
- la distribution des requêtes de recherche par le médiateur d'accès aux dossiers à tous les médiateurs de service de consignation;
- la vérification des droits d'accès à partir des profils de restriction et des listes d'exception au niveau de chaque médiateur de service de consignation (donc de manière totalement décentralisée).

On peut noter que le profil d'accès est transmis par le médiateur d'accès aux différents médiateurs de service lors de la recherche. Ce profil d'accès est tout d'abord récupéré par la recherche exhaustive des médiateurs de service afin de trouver lequel possède le profil d'accès du patient (le médiateur de services de consignation (MS) du médecin de confiance du patient sera le seul à répondre positivement). Une fois le profil récupéré, le médiateur d'accès peut le conserver en tant que donnée de la session afin d'accélérer les requêtes suivantes (autres recherches ou consultations).

Faisant référence à la figure 11, la consultation d'un document consiste à obtenir l'intégralité d'un document d'après sa référence. Pour cela le médiateur d'accès aux dossiers 25 s'adresse directement au médiateur de service de consignation 29 concerné. Bien que les droits d'accès aient été vérifiés lors de l'étape de recherche, ils doivent l'être de nouveau lors de la consultation afin de parer au cas où une référence serait transmise à une autre personne n'ayant pas les droits requis.

D'autre part, un professionnel ayant accédé une fois à un document doit pouvoir y accéder de nouveau, même si le patient change les droits d'accès entre-temps. Cela est réalisé par l'inscription de l'identité du professionnel dans la liste des exceptions liées au document lors de la première consultation.

Comme décrit précédemment, le patient a la possibilité de modifier les profils d'accès à des informations, les droits étant répartis en deux types distincts: des restrictions basées sur des profils de documents et des exceptions autorisant l'accès à des documents ou dossiers spécifiques par des personnes particulières.

Pour mettre à Jour le profil d'accès (voir Fig. 12), le médiateur d'accès aux dossiers 25 contacte le médiateur de service de consignation 29 du médecin de confiance du patient et lui donne le nouveau profil à sauvegarder. Pour mettre à jour les exceptions d'accès, le médiateur d'accès aux dossiers transmet à chaque médiateur de service de consignation 29' les exceptions qui le concernent. Les exceptions sont stockées dans la base des droits d'accès 60' du système serveur consignataire des dossiers correspondants. Le déroulement des étapes de modification des droits d'accès est montré dans la figure 12.

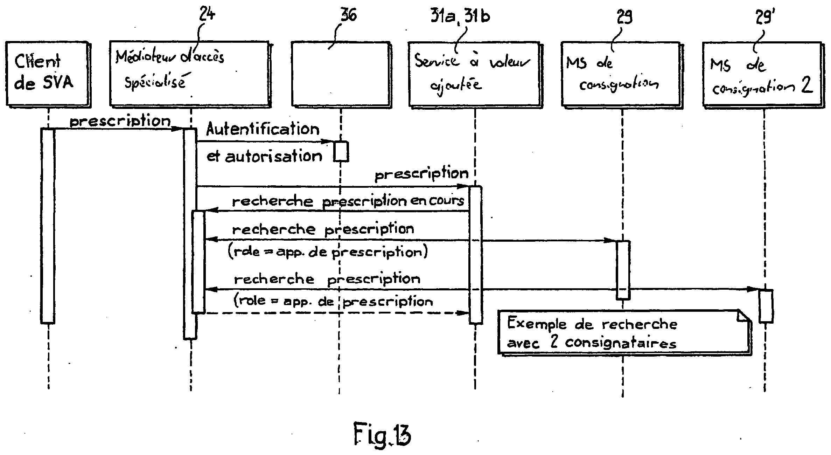

La figure 13 montre comment le service à valeur ajoutée 31a, 31b, en l'occurrence l'aide à la prescription médicamenteuse, s'intègre au sein du réseau sécurisé.

La prescription de médicaments de manière électronique comporte une réelle valeur ajoutée si elle est épaulée par un système de détection d'interactions médicamenteuses. Dans le cadre du système de santé informatisé, le service de prescription se renseigne sur l'ensemble des prescriptions en cours pour le patient concerné auprès des médiateurs de service de consignation 29, 29' afin de détecter d'éventuelles incompatibilités entre des médicaments prescrits par des professionnels différents.

Afin de prévenir des problèmes liés aux incompatibilités médicamenteuses, le système d'aide à la prescription recherche toutes les prescriptions en cours publiées sur le réseau du système de santé informatisé, et cela malgré les restrictions d'accès définies par le patient. Néanmoins, en cas d'incompatibilité avérée, le prescripteur est averti, mais de manière à ce que des informations auxquelles il n'a normalement pas accès, ne lui soient pas divulguées.

Faisant référence aux figures 1 et 2, le système serveur point d'interconnexion 5 comprend un médiateur de services externes 30 qui agit comme passerelle entre le système de santé informatisé et d'autres réseaux médicaux ou à valeur ajoutée. Les fonctions principales de ce système de serveur point d'interconnexion 5 sont les suivantes:
- authentification mutuelle;
- conversions de formats et de protocole;
- relais de messagerie;
- proxy applicatif;
- gestion d'erreurs;
- administration: répond aux commandes définies par l'interface commune d'administration applicative.

Le système de santé informatisé comprend en outre des journaux applicatifs 55,58, 59 pour conserver une trace des opérations effectuées par un ou plusieurs composants du réseau, ces applications étant accessibles par tout composant local. Afin de ne pas créer un point de centralisation de données confidentielles, chaque médiateur technique est muni de son propre journal applicatif qui permet d'effectuer des contrôles à posteriori en cas de problèmes (accès illicite, mauvaise décision thérapeutique suite aux informations fournies par le réseau, etc.). Des données traitées par les journaux applicatifs sont un timbre temps (timestamp), l'identification des utilisateurs participant à l'opération, la nature de l'opération, l'identification des documents concernés, et autres paramètres pertinents de l'opération.

Les fonctions principales des journaux applicatifs sont les suivantes:
- enregistrement d'une trace;
- interrogation: recherche et restitution des traces correspondant à un critère de recherche portant sur les paramètres enregistrés;
- nettoyage des traces obsolètes, si nécessaire;
- administration: répond aux commandes définies par l'interface commune d'administration applicative.

Le réseau fédérateur 4 est un réseau de communication à haut débit entre les infrastructures points d'accès 2a, 2b et les systèmes serveurs consignataires de données 3 ainsi que les systèmes serveurs points d'interconnexion 5. Toutes les données circulant sur le réseau fédérateur sont chiffrées, la fonction codage/décodage des données étant assurée par les concentrateurs VPN situés dans les infrastructures points d'accès et dans chaque système serveur consignataire de données et chaque système serveur point d'interconnexion. Le réseau fédérateur est, dans l'exemple décrit, un réseau fermé de type logique, tel qu'un réseau régional ou métropolitain (city network) fermé utilisant une infrastructure fibre optique, dédié à un groupe d'utilisateurs autorisés. Il est également possible, dans la mesure où cela est disponible, d'avoir un réseau fermé basé sur une infrastructure privée, c'est-à-dire à utilisation unique pour le système de santé informatisé.

Le système de santé informatisé a de préférence au moins deux points d'infrastructure d'accès 2a, 2b localisés sur des sites différents afin d'augmenter la sécurité de sauvegarde des données techniques et administratives et d'assurer l'accès et le fonctionnement du réseau en cas de panne d'un ou de plusieurs composants d'une des infrastructures points d'accès.

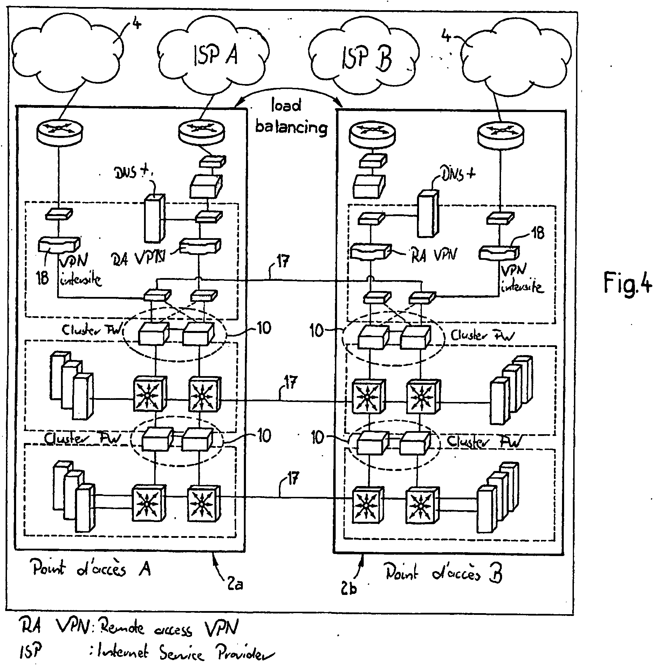

Faisant référence à la Fig. 4, les redondances mises en place au niveau des points d'accès se situent à deux niveaux:
- Au niveau global, chaque infrastructure point d'accès est capable de fonctionner de façon indépendante et de reprendre l'ensemble du trafic pris en charge par l'autre en cas de panne ou d'opération de maintenance préventive sur ce dernier;
- Au niveau de chaque point d'accès, des redondances sont introduites, tant au niveau des pare-feu 10 (clusters) que des commutateurs sensibles (doublement des équipements et des liens qui les connectent).

Ainsi, une panne simple d'un équipement ne devrait pas aboutir à la mise hors service de l'infrastructure point d'accès. Pour ce prémunir contre une panne d'une des infrastructures points d'accès au réseau fédérateur 4, un lien direct fibre optique 17 relie les deux concentrateurs VPN intersites 18 de chaque infrastructure point d'accès.

Les deux infrastructures points d'accès sont par ailleurs Interconnectées par des liaisons fibres optiques directes au niveau des zones services et zone haute sécurité. Ceci permet la réplication des différents serveurs et données qui doivent être consistants entre les deux sites sans surcharger inutilement les accès au réseau fédérateur ni le chemin interne à travers un voire deux pares-feu. Des réseaux locaux virtuels VLAN (Virtual Local Area Network) communs aux deux infrastructures points d'accès peuvent ainsi être créés, par exemple en utilisant le protocole 802.1q sur Gigabit Ethemet.

Donc, de préférence, trois paires de fibres optiques relient les infrastructures points d'accès pour assurer les fonctions de redondance et de réplication entre les deux points d'accès.

A titre d'exemple, deux plates-formes technologiques sur lesquelles le système de santé informatisé peut être basé, sont résumées dans le tableau ci-après:

| Elément | Plate-forme A | Plate-forme B |
|---|---|---|
| Système d'exploitation | Unix et Linux | Windows (2003 Serveur ou plus) |
| Server Web | Apache/Tomcat | **IIS** avec support ASP.NET |
| Serveur applicatif | JBoss | .NET framework |
| Middleware | RMI/IIOP + SOAP | .NET remoting + SOAP |
| Serveur de base de données | Oracle | Oracle ou SQLserver |
| Serveur LDAP | OpenLDAP | Windows Active Directory |

Pour la communication entre un logiciel client et un médiateur d'accès, afin de permettre à différents éditeurs de logiciel d'intégrer les services de publication, de recherche et de consultation de documents sur le système de santé informatisé, il est avantageux de proposer une interface de communication ouverte. Dans cette optique, une interface de type Web services basée sur SOAP/HTTP peut être utilisée dans l'état actuel de la technologie.

Pour la communication entre un médiateur d'accès et un médiateur de service, les médiateurs étant des composants logiciels techniques internes au système de réseau sécurisé, le choix d'un standard d'interfaçage entre ceux-ci est dépendant de leur implémentation. Une implémentation basée sur J2EE peut utiliser RMI/IIOP, une implémentation basée sur .NET peut utiliser .NET Remoting, mais d'autres possibilités existent: JXTA (communication peer to peer), des Web services, des queues de messages et d'autres.

L'interface de bases de données pour avoir accès aux bases de données (essentiellement par les médiateurs de service), peut se faire par les standards classiques que sont JDBC dans le monde Java ou ODBC, et ADO dans le monde de Microsoft.

L'interface d'administration des composants gérés par le système de réseau sécurisé tels que les médiateurs peut utiliser les standards les plus appropriés à la plate-forme d'implémentation (RMI/IIOP, JMX, Web Services, WMI...).

Pour l'interface d'annuaires, le système de réseau sécurisé comporte un annuaire central des professionnels de santé utilisé par les utilisateurs à travers le service de messagerie sécurisée, mais aussi par les professionnels de la santé. L'accès à cet annuaire peut se faire par le standard LDAP. D'autre part, le système de réseau sécurisé maintient à jour un registre de l'ensemble des médiateurs de service faisant partie du réseau, afin que les médiateurs d'accès sachent où rediriger les requêtes de manipulation de documents. Ce registre peut être vu comme une ressource LDAP du réseau.

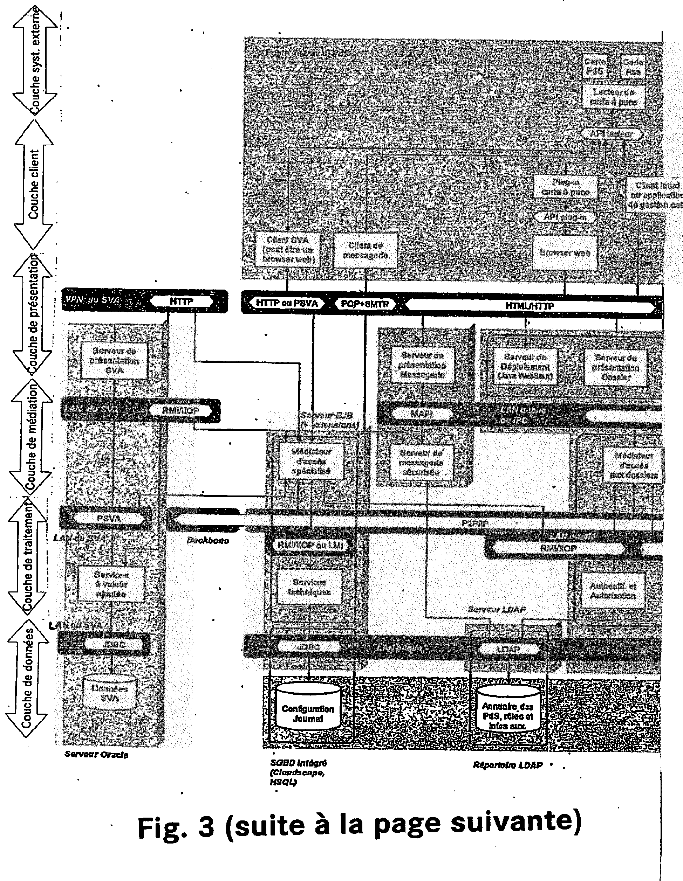

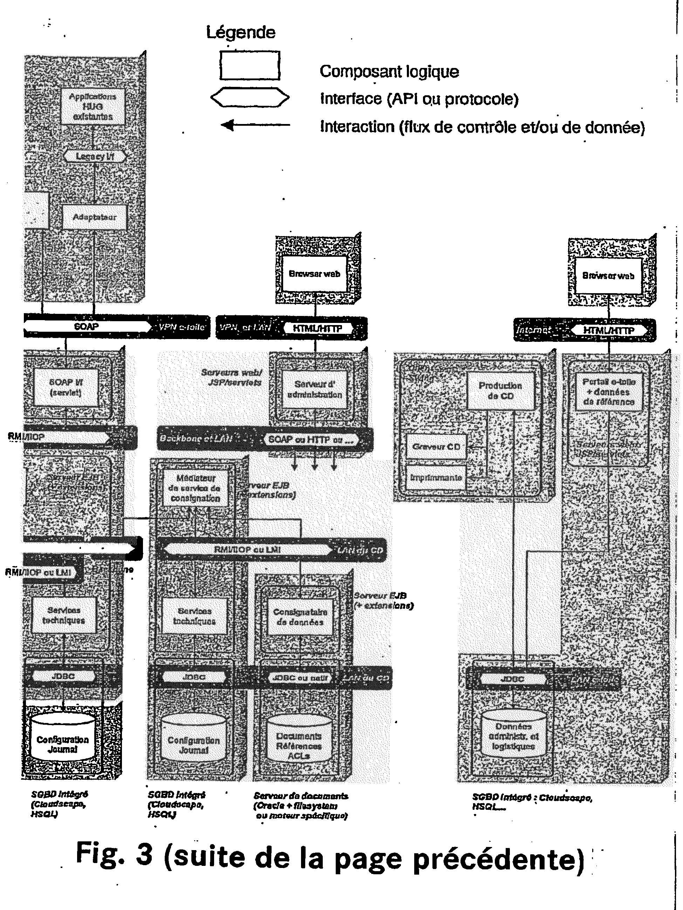

Le diagramme de la figure 3 illustre la transposition du modèle d'architecture logique selon les choix technologiques exposés plus haut. Cette solution est basée sur les technologies Java/J2EE, mais d'autres solutions utilisant d'autres technologies comme. Net sont possibles. L'architecture est de type n-tiers: elle est divisée en couches séparant clairement les responsabilités de présentation, de logique métier, et de stockage des données. La partie haute représente la couche cliente, matériellement présente chez les professionnels de santé accédant au système de santé informatisé. La partie centrale matérialise la couche de présentation et les services métiers liés au système de santé informatisé: les médiateurs d'accès et de service, le serveur de messagerie, les services à valeur ajoutée. Enfin, la partie basse fait apparaître les composants techniques du système de santé informatisé ainsi que les bases de données.

En ce qui concerne les accès par les utilisateurs (clients), les interfaces adoptées sont basées sur des technologies ouvertes et indépendantes d'une plate-forme spécifique (HTTP, SOAP, SMTP, POP3. LDAP...). Les interfaces plus techniques utilisées au sein du système de réseau sécurisé sont liées aux technologies du monde Java, en l'occurrence RMI/IIOP et JDBC essentiellement.

La couche de présentation Web utilise des services HTTP servant des pages HTML statiques (Apache, par exemple) et des pages dynamiques de type JSP et Servlet.

## Revendications

1. Système de réseau informatique sécurisé pour la gestion de données protégées, accessible par des utilisateurs (6) munis de cartes à puce pour l'authentification et l'autorisation des utilisateurs dans le système, le système comprenant au moins une infrastructure point d'accès (2a, 2b) reliée à travers un réseau de communication fédérateur fermé (4) à une pluralité de systèmes serveurs consignataires de données (3a, 3b, 3c) situés sur des sites différents, chaque système serveur consignataire de données comprenant au moins une base de données dans laquelle des données protégées constituant des documents sont stockées, et un médiateur technique de service de consignation (29) pour gérer l'accès aux documents stockés dans la base de données, différents documents formant un dossier relatif à une personne pouvant être distribués sur plusieurs des systèmes serveurs consignataires de données, l'infrastructure point d'accès comprenant au moins un médiateur d'accès aux dossiers (25) sous forme d'un système serveur avec applications qui contrôle et gère l'accès d'utilisateurs (6) aux documents stockés dans les systèmes serveurs consignataires de données, **caractérisé en ce que** le médiateur d'accès aux dossiers (25) est configuré a distribuer à tous les médiateurs techniques de services de consignation (29) une requête de recherche d'un document par un utilisateur autorisé du système de réseau informatique sécurisé et les médiateurs techniques de services de consignation (29) sont configurées a vérifier les droits d'accès de l'utilisateur à partir des profils de droits d'accès et le le médiateur d'accès aux dossiers (25) est configuré de telle sorte que, lors de la consultation d'un document, le médiateur d'accès aux dossiers (25) s'adresse directement au médiateur technique de services de consignation (29) concerné après une étape de recherche du document et re-vérifie les droits d'accès aux documents par rapport à l'utilisateur demandant la consultation avant de le transmettre à l'utilisateur.

2. Système selon la revendication 1, **caractérisé en ce que** le système serveur consignataire de données comprend un serveur de documents (40) et un registre (61) comprenant des informations sur les droits d'accès à différents documents stockés dans ce serveur pour déterminer les droits d'accès aux documents d'un dossier, en fonction de l'identité ou du rôle de l'utilisateur demandant l'accès au dossier.

3. Système selon la revendication 2, **caractérisé en ce que** le registre d'accès est sous forme d'un registre d'exceptions qui stocke les informations sur les accès non-autorisés.

4. Système selon l'une des revendications précédentes, **caractérisé en ce qu'**il comprend une zone de services dans laquelle se trouve le médiateur d'accès aux dossiers (25) et une zone de haute sécurité (15) séparée de la zone de services par un pare-feu (10c), la zone haute sécurité comprenant un système serveur d'autorité de certification (36) dans lequel sont stockées des données sur des certificats électroniques correspondant aux certificats électroniques stockés sur les cartes à puce des utilisateurs.

5. Système selon la revendication précédente, **caractérisé en ce que** la zone de haute sécurité comprend un annuaire électronique d'informations sur les utilisateurs, comprenant l'identité et le rôle de ces utilisateurs.

6. Système selon l'une des revendications précédentes, **caractérisé en ce qu'**il y a au moins deux infrastructures points d'accès (2a, 2b) séparées physiquement et reliées par le réseau de communication fédérateur (4).

7. Système selon l'une des revendications précédentes, **caractérisé en ce que** les infrastructures points d'accès comprennent une zone VPN, Virtual Private Network, externe (8) reliée à une zone de services (11) à travers un pare-feu (10b) dans lequel se trouve le médiateur d'accès aux dossiers (25), relié à une zone de haute sécurité (15) à travers un pare-feu (10c).

8. Système selon la revendication précédente, **caractérisé en ce que** la zone VPN externe (8) comprend un concentrateur VPN, tel qu'un concentrateur SSL 25, Secure Socket Layer, pour la communication par internet (7) avec des postes d'utilisateur (6) à travers un tunnel de communication sécurisé.

9. Système selon une des revendications 7 ou 8, **caractérisé en ce que** la zone de services comprend un médiateur d'accès spécialisé (24) sous forme d'un système serveur avec applications pour gérer les accès des utilisateurs à des services électroniques à valeur ajoutée.

10. Système selon l'une des revendications précédentes, **caractérisé en ce que** le serveur de documents (40) du système serveur consignataire de données est distinct du système serveur du médiateur technique de services de consignation (29) et relié au réseau fédérateur (4) à travers un pare-feu (10b).

11. Système selon l'une des revendications précédentes, **caractérisé en ce que** chaque système serveur consignataire de données comprend un journal électronique pour journaliser toutes les requêtes concernant le stockage ou la lecture de données protégées.

12. Système selon l'une des revendications précédentes, **caractérisé en ce que** l'infrastructure point d'accès comprend une zone de gestion (16) comprenant des systèmes serveurs (33, 38, 28) pour la gestion de l'infrastructure et des applications du système de réseau informatique sécurisé, cette zone étant distincte de la zone de services dans laquelle se trouve le médiateur d'accès aux dossiers (25) et n'étant accessible que par du personnel d'administration responsable des opérations de gestion de l'infrastructure.

13. Système selon la revendication précédente, **caractérisé en ce que** la zone de gestion comprend un système serveur de gestion de sécurité (28) relié à des sondes de détection d'intrusion (27) installées sur des lignes de communication du système de réseau informatique sécurisé (2) et ayant des applications pour reconstituer ou tracer des événements en analysant les journaux de l'infrastructure point d'accès et des systèmes serveurs consignataires de données (3a, 3b, 3c) ainsi que des données transmises par les sondes de détection d'intrusion.

14. Système selon la revendication 12 ou 13, **caractérisé en ce que** la zone de gestion comprend un système serveur de gestion d'infrastructure (33) comprenant un registre de configuration (57) dans lequel sont stockées les informations concernant la configuration logique et physique du système de réseau informatique sécurisé, incluant les adresses des médiateurs et des systèmes serveurs pour des services à valeur ajoutée.

15. Système selon l'une des revendications précédentes, **caractérisé en ce que** l'infrastructure point d'accès comprend un serveur de messagerie sécurisé pour l'envoi de messages électroniques entre utilisateurs ou pour la transmission de données protégées, le serveur de messagerie sécurisé utilisant les clés électroniques privées des cartes à puce des utilisateurs pour chiffrer les données transmises.

16. Système selon l'une des revendications précédentes, caractérisé' en ce qu'il comprend un ou plusieurs systèmes serveurs points d'interconnexion (5) reliés, d'une part aux infrastructures points d'accès (2a, 2b) à travers le réseau fédérateur (4), d'autre part à d'autres réseaux ou des services à valeur ajoutée, le système serveur point d'interconnexion comprenant un médiateur de services externes (30) agissant comme passerelle entre le système de réseau informatique sécurisé et les autres réseaux et comprenant les fonctions d'authentification mutuelle, de conversion de formats et de protocole, et de relais de messagerie.

17. Système selon l'une des revendications précédentes, **caractérisé en ce qu'**il comprend des journaux applicatifs (55, 58, 59) pour conserver une trace des opérations effectuées par un ou plusieurs composants du système, les données traitées par les journaux applicatifs étant l'identification des utilisateurs participant à l'opération, la nature de l'opération, l'identification des documents concernés et un timbre temps.

18. Procédé de gestion de données dans un système de réseau informatique sécurisé, comprenant au moins une infrastructure point d'accès (2a, 2b) reliée à travers un réseau de communication fédérateur fermé (4) à une pluralité de systèmes serveurs consignataires de données (3a, 3b, 3c) situés sur des sites différents, chaque système serveur consignataire de données comprenant au moins une base de données (62) dans laquelle des données protégées constituant des documents sont stockées, et un médiateur technique de services de consignation (29) pour gérer l'accès aux documents stockés dans la base de données, le procédé comprenant la création et le stockage desdits documents dans des serveurs de documents (40) situés dans lesdits systèmes serveurs consignataires de données, les dits documents constituant un dossier étant distribués sur différents systèmes serveurs consignataires de données, l'infrastructure point d'accès comprenant au moins un médiateur d'accès aux dossiers sous forme d'un système serveur avec applications qui contrôle et gère l'accès d'utilisateurs (6) aux documents stockés dans les systèmes serveurs consignataires de données, **caractérisé en ce que** lors de l'émission d'une requête de recherche d'un document par un utilisateur autorisé du système de réseau informatique sécurisé, la requête de recherche est distribuée par le médiateur d'accès aux dossiers (25) à tous les médiateurs techniques de services de consignation (29) et les droits d'accès à partir des profils de droits d'accès au niveau de chaque médiateur technique de services de consignation (29) sont vérifiés, **caractérisé en ce que**, lors de la consultation d'un document, le médiateur d'accès aux dossiers (25) s'adresse directement au médiateur technique de services de consignation (29) concerné après l'étape de recherche du document et re-vérifie les droits d'accès aux documents par rapport à l'utilisateur demandant la consultation avant de le transmettre à l'utilisateur.

19. Procédé selon la revendication précédente, **caractérisé en ce que** l'on stocke, au moyen d'une application de gestion du profil d'accès (51), un profil d'accès, défini par un utilisateur, aux documents de son dossier dans au moins un des systèmes serveurs consignataires de données (3a, 3b, 3c).

20. Procédé selon la revendication précédente, **caractérisé en ce que** l'on stocke dans chaque système serveur consignataire de données dans lequel des documents d'un dossier sont stockés, des listes de contrôle d'accès associées spécifiquement aux documents stockés et déterminant le profil d'accès seulement pour ces documents.

21. Procédé selon l'une des deux revendications précédentes, **caractérisé en ce que** l'on stocke des informations sur les identités et les rôles des utilisateurs du système de réseau informatique sécurisé dans un annuaire du système serveur dans une zone haute sécurité de l'infrastructure point d'accès, cet annuaire étant accédé par le médiateur d'accès (25) afin de déterminer, entre autre, les droits d'accès des utilisateurs selon leur identité et leur rôle.

22. Procédé selon l'une des quatre revendications précédentes, **caractérisé en ce que**, lors de la création et du stockage d'un document, le médiateur d'accès aux dossiers au moyen d'une application de validation, vérifie la conformité du document quant à son format, sa syntaxe, et ses attributs.

## Patentansprüche

1. Gesichertes computergestütztes Netzwerksystem für das Management geschützter Daten, auf das durch Benutzer (6) zugegriffen werden kann, die mit Chipkarten zur Authentifizierung und Genehmigung der Benutzer in dem System versehen sind, wobei das System mindestens eine Zugangspunktinfrastruktur (2a, 2b) umfasst, die über einen geschlossenes übergreifendes Kommunikationsnetzwerk (4) mit mehreren Datenaufzeichnungsserversystemen (3a, 3b, 3c) verbunden sind, die sich auf unterschiedlichen Standorten befinden, wobei jedes Datenaufzeichnungsserversystem mindestens eine Datenbank umfasst, in der geschützte Daten, die Dossiers bilden, gespeichert sind, und einen technischen Aufzeichnungsdienstvermittler (29) zum Managen des Zugangs zu den in Dokumenten, die in der Datenbank gespeichert sind, wobei unterschiedliche Dokumente ein Dossier in Zusammenhang mit einer Person bilden, das auf mehreren Datenaufzeichnungsserversystemen verteilt werden kann, wobei die Zugangspunktinfrastruktur mindestens einen Dossierzugangsvermittler (25) in Form eines Serversystems mit Anwendungen umfasst, der den Zugang von Benutzern (6) zu den in den Datenaufzeichnungsserversystemen gespeicherten Dokumenten steuert und managt, **dadurch gekennzeichnet, dass** der Dossierzugangsvermittler (25) konfiguriert ist, um an alle Aufzeichnungsdienstvermittler (29) eine Suchanfrage eines Dokuments für einen befugten Benutzer des gesicherten computergestützten Netzwerksystems zu verteilen, und die Aufzeichnungsdienstvermittler (29) konfiguriert sind, um die Zugangsberechtigungen des Benutzers ausgehend von Zugangsrechtprofilen zu prüfen, und der Dossierzugangsvermittler (25) derart konfiguriert ist, dass sich bei der Konsultation eines Dokuments der Dossierzugangsvermittler (25) direkt an den betreffenden technischen Aufzeichnungsdienstvermittler (29) nach einem Suchschritt des Dokuments wendet und die Berechtigungen zum Zugang zu den Dokumenten in Bezug auf den Benutzer, der die Konsultation verlangt, neu prüft, bevor er sie an den Benutzer überträgt.

2. System nach Anspruch 1, **dadurch gekennzeichnet, dass** das Datenaufzeichnungsserversystem einen Dokumentenserver (40) und ein Register (61) umfasst, das Informationen über die Berechtigungen des Zugangs zu unterschiedlichen Dokumenten, die in diesem Server gespeichert sind, umfasst, um die Zugangsberechtigungen zu den Dokumenten eines Dossiers in Abhängigkeit von der Identität und der Rolle des Benutzers, der den Zugang zu dem Dossier verlangt, zu bestimmen.

3. System nach Anspruch 2, **dadurch gekennzeichnet, dass** das Zugangsregister die Form eines Ausnahmeregisters hat, welches Informationen über unbefugte Zugänge speichert.

4. System nach einem der vorhergehenden Ansprüche, **dadurch gekennzeichnet, dass** es eine Dienstzone, in der sich der Dossierzugangsvermittler (25) befindet, und eine Hochsicherheitszone (15), die von der Dienstezone durch einen Firewall (10c) getrennt ist, umfasst, wobei die Hochsicherheitszone ein Zertifizierungsstellenserversystem (36) umfasst, in dem Daten über elektronische Zertifikate gespeichert sind, die elektronischen Zertifikaten entsprechen, die auf den Chipkarten der Benutzer gespeichert sind.

5. System nach dem vorhergehenden Anspruch, **dadurch gekennzeichnet, dass** die Hochsicherheitszone ein elektronisches Telefonbuch mit Informationen über die Benutzer umfasst, das die Identität und die Rolle dieser Benutzer umfasst.

6. System nach einem der vorhergehenden Ansprüche, **dadurch gekennzeichnet, dass** mindestens zwei Zugangspunktinfrastrukturen (2a, 2b) bestehen, die physisch getrennt und durch das übergreifende Kommunikationsnetzwerk (4) verbunden sind.

7. System nach einem der vorhergehenden Ansprüche, **dadurch gekennzeichnet, dass** die Zugangspunktinfrastrukturen eine externe VPN-Zone (8), Virtual Private Network, umfassen, die mit einer Dienstezone (11) durch einen Firewall (10b) verbunden ist, in dem sich der Dossierzugangsvermittler (25) befindet, der mit einer Hochsicherheitszone (15) durch einen Firewall (10c) verbunden ist.

8. System nach dem vorhergehenden Anspruch, **dadurch gekennzeichnet, dass** die externe VPN-Zone (8) einen VPN-Konzentrator, wie einen SSL 25-Konzentrator, Secure Socket Layer, für die Kommunikation per Internet (7) mit Benutzerposten (6) durch einen gesicherten Kommunikationstunnel umfasst.

9. System nach einem der Ansprüche 7 und 8, **dadurch gekennzeichnet, dass** die Dienstezone einen spezialisierten Zugangsvermittler (24) in Form eines Serversystems mit Anwendungen umfasst, um die Zugänge der Benutzer zu elektronischen Mehrwertdiensten zu managen.

10. System nach einem der vorhergehenden Ansprüche, **dadurch gekennzeichnet, dass** der Dokumentenserver (40) des Datenaufzeichnungsserversystems von dem Serversystem des technischen Aufzeichnungsdienstvermittlers (29) getrennt und mit dem übergreifenden Netzwerk (4) durch eine Firewall (10b) verbunden ist.

11. System nach einem der vorhergehenden Ansprüche, **dadurch gekennzeichnet, dass** jedes Datenaufzeichnungsserversystem ein elektronisches Protokoll zum Protokollieren aller Anfragen in Zusammenhang mit dem Speichern oder dem Lesen von geschützten Daten umfasst.

12. System nach einem der vorhergehenden Ansprüche, **dadurch gekennzeichnet, dass** die Zugangspunktinfrastruktur eine Managementzone (16) umfasst, die Serversysteme (33, 38, 28) für das Management der Infrastruktur und der Anwendungen des gesicherten computergestützten Netzwerksystems umfasst, wobei diese Zone von der Dienstezone getrennt ist, in der sich der Dossierzugangsvermittler (25) befindet und nur durch das Verwaltungspersonal zugänglich ist, das für die Managementvorgänge der Infrastruktur zuständig ist.

13. System nach dem vorhergehenden Anspruch, **dadurch gekennzeichnet, dass** die Managementzone ein Sicherheitsmanagementserversystem (28) umfasst, das mit Einbruchserfassungssonden (27) verbunden ist, die auf Kommunikationsleitungen des gesicherten computergestützten Netzwerksystems (2) installiert sind, und Anwendungen hat, um Ereignisse zu rekonstituieren oder zurückzuverfolgen, indem die Protokolle der Zugangspunktinfrastruktur und der Datenaufzeichnungsserversysteme (3a, 3b, 3c) sowie die Daten, die von den Einbruchserfassungssonden übertragen werden, analysiert werden.

14. System nach Anspruch 12 oder 13, **dadurch gekennzeichnet, dass** die Managementzone ein Infrastrukturmanagementserversystem (33) umfasst, das ein Konfigurationsregister (57) umfasst, in dem die Informationen in Zusammenhang mit der logischen und physischen Konfiguration des gesicherten computergestützten Netzwerksystems gespeichert sind, die die Adressen der Vermittler und Serversysteme für Mehrwertdienste enthalten.

15. System nach einem der vorhergehenden Ansprüche, **dadurch gekennzeichnet, dass** die Zugangspunktinfrastruktur einen gesicherten E-Mail-Server für das Senden elektronischer Mitteilungen zwischen Benutzern oder für die Übertragung geschützter Daten umfasst, wobei der gesicherte E-Mail-Server die privaten elektronischen Codes der Chipkarten der Benutzer verwendet, um die übertragenen Daten zu verschlüsseln.

16. System nach einem der vorhergehenden Ansprüche, **dadurch gekennzeichnet, dass** es ein oder mehrere Zusammenschaltungspunkt-Serversysteme (5) umfasst, die einerseits mit den Zugangspunktinfrastrukturen (2a, 2b) durch das übergreifende Netzwerk (4) und andererseits mit anderen Netzwerken oder Mehrwertdiensten verbunden sind, wobei das Zusammenschaltungspunkt-Serversystem einen externen Vermittler (30) externer Dienste umfasst, der wie ein Gateway zwischen dem gesicherten computergestützten Netzwerksystem und den anderen Netzwerken wirkt und die Funktionen gegenseitige Authentifizierung, Umwandlung von Formaten und Protokoll und E-Mail-Relais umfasst.

17. System nach einem der vorhergehenden Ansprüche, **dadurch gekennzeichnet, dass** es Anwendungsprotokolle (55, 58, 59) umfasst, um eine Spur der Vorgänge aufzubewahren, die von einer oder mehreren Komponenten des Systems ausgeführt wurden, wobei die von den Anwendungsprotokollen verarbeiteten Daten die Identifikation der Benutzer sind, die an dem Vorgang teilnehmen, die Art des Vorgangs, die Identifikation der betreffenden Dokumente und ein Zeitstempel.

18. Datenmanagementverfahren in einem gesicherten computergestützten Netzwerk, das mindestens eine Zugangspunktinfrastruktur (2a, 2b) umfasst, die durch ein geschlossenes übergreifendes Kommunikationsnetzwerk (4) mit mehreren Datenaufzeichnungsserversystemen (3a, 3b, 3c), die sich auf unterschiedlichen Standorten befinden, verbunden ist, wobei jedes Datenaufzeichnungsserversystem mindestens eine Datenbank (62) umfasst, in der geschützte Daten, die Dokumente bilden, gespeichert sind, und einen technischen Aufzeichnungsdienstvermittler (29), um den Zugang zu den Dokumenten zu managen, die in der Datenbank gespeichert sind, wobei das Verfahren das Anlegen und das Speichern der Dokumente in Dokumentenservern (40) umfasst, die sich in den Datenaufzeichnungssystemservern befinden, wobei die Dokumente ein Dossier bilden, welches auf mehrere Datenaufzeichnungsserversysteme verteilt ist, wobei die Zugangspunktinfrastruktur mindestens einen Dossierzugangsvermittler in Form eines Serversystems mit Anwendungen umfasst, der den Zugang von Benutzern (6) zu Dokumenten, die in den Datenaufzeichnungsserversystemen gespeichert sind, steuert und managt, **dadurch gekennzeichnet, dass** beim Ausstellen einer Suchanfrage eines Dokuments durch einen befugten Benutzer des gesicherte computergestützten Netzwerksystems die Suchanfrage von dem Dossierzugangsvermittler (25) an alle technischen Aufzeichnungsdienstvermittler (29) verteilt wird und die Zugangsberechtigungen ausgehend von den Zugangsberechtigungsprofilen auf dem Niveau jedes technischen Aufzeichnungsdienstvermittlers (29) prüft werden, und, bei der Konsultation eines Dokuments, der Dossierzugangsvermittler (25) sich direkt an den technischen betreffenden Aufzeichnungsdienstvermittler (29) nach dem Suchschritt des Dokuments wendet und die Berechtigungen zum Zugang zu den Dokumenten in Bezug auf den Benutzer, der die Konsultation verlangt, neu prüft, bevor er sie an den Benutzer weitergibt.

19. Verfahren nach dem vorhergehenden Anspruch, **dadurch gekennzeichnet, dass** man mittels einer Zugangsprofil-Managementanwendung (51) ein Profil für den Zugang, der von einem Benutzer definiert wird, zu den Dokumenten seines Dossiers in mindestens einem der Datenaufzeichnungsserversysteme (3a, 3b, 3c) speichert.

20. Verfahren nach dem vorhergehenden Anspruch, **dadurch gekennzeichnet, dass** man in jedem Datenaufzeichnungsserversystem, in dem Dokumente eines Dossiers gespeichert sind, Zugangsprüflisten speichert, die spezifisch mit den gespeicherten Dokumenten verbunden sind und das Zugangsprofil nur für diese Dokumente bestimmen.

21. Verfahren nach einem der zwei vorhergehenden Ansprüche, **dadurch gekennzeichnet, dass** man Informationen über die Identitäten und die Rollen der Benutzer des gesicherten computergestützten Netzwerksystems, in einem Telefonbuch des Serversystems in einer Hochsicherheitszone der Zugangspunktinfrastruktur speichert, wobei auf dieses Telefonbuch von dem Zugangsvermittler (25) zugegriffen wird, um unter anderem die Zugangsberechtigungen der Benutzer gemäß ihrer Identität und ihrer Rolle zu bestimmen.

22. Verfahren nach einem der vier vorhergehenden Ansprüche, **dadurch gekennzeichnet, dass** bei der Anlegung und beim Speichern eines Dokuments der Dossierzugangsvermittler mittels einer Bestätigungsanwendung die Übereinstimmung des Dokuments hinsichtlich seines Formats, seiner Syntax und seiner Attribute prüft.

## Claims

1. Secure computer network system for the management of protected data, accessible by users (6) provided with smart cards for authentication and authorization of users in the system, the system comprising at least one gateway infrastructure (2a, 2b) connected via a closed backbone communication network (4) to a plurality of data logging server systems (3a, 3b, 3c) situated on different sites, each data logging server system comprising at least one database in which protected data constituting documents is stored, and a logging service technical mediator (29) for managing access to the documents stored in the database, different documents forming a file relating to a person possibly being distributed across a plurality of data logging server systems, the gateway infrastructure comprising at least one file access mediator (25) in the form of a server system with applications that monitor and manage the access of users (6) to the documents stored in the data logging server systems, **characterized in that** the file access mediator (25) is configured to distribute to all the logging service mediators (29) a document search request by an authorized user of the secured computer network system and the logging service mediators (29) are configured to verify the access rights of the user on the basis of access rights profiles, and the file access mediator (25) is configured so that, at the time of the consultation of a document, the file access mediator (25) addresses the logging service technical mediator (29) concerned directly after a step of searching for the document and reverifies the rights of access to the documents relative to the user requesting the consultation before transmitting it to the user.

2. System according to Claim 1, **characterized in that** the data logging server system comprises a document server (40) and a register (61) comprising information on the rights of access to different documents stored **in that** server to determine the rights of access to the documents of a file as a function of the identity and of the role of the user requesting access to the file.

3. System according to Claim 2, **characterized in that** the access register is in the form of an exceptions register that stores information on unauthorized access.

4. System according to any one of the preceding claims, **characterized in that** it comprises a service area in which the file access mediator (25) is located and a high-security area (16) separated from the service area by a fire wall (10c), the high-security area comprising a certification authority server system (36) in which is stored data on electronic certificates corresponding to electronic certificates stored on the smart cards of the users.

5. System according to the preceding claim, **characterized in that** the high-security area comprises an electronic directory of information on the users comprising the identity and the role of those users.

6. System according to any one of the preceding claims, **characterized in that** there are at least two physically separate gateway infrastructures (2a, 2b) connected by the backbone communication network (4).

7. System according to any one of the preceding claims, **characterized in that** the gateway infrastructures comprise an external VPN, virtual private network, area (8) connected via a firewall (10b) to a service area (11) in which the file access mediator (25) is located connected to a high-security area (15) via a firewall (10c).

8. System according to the preceding claim, **characterized in that** the external VPN area (8) comprises a VPN concentrator, such as an SSL 25, Secure Socket Layer, concentrator, for communication over the Internet (7) with user stations (6) via a secure communication tunnel.

9. System according to either of Claims 7 or 8, **characterized in that** the service area comprises a specialized access mediator (24) in the form of a server system with applications for managing access of users to value-added electronic services.

10. System according to any one of the preceding claims, **characterized in that** the document server (40) of the data logging server system is separate from the logging service technical mediator server (29) and connected to the backbone network (4) via a firewall (10b).

11. System according to any one of the preceding claims, **characterized in that** each data logging server system comprises an electronic log for logging all requests concerning the storage or reading of protected data.

12. System according to any one of the preceding claims, **characterized in that** the gateway infrastructure comprises a management area (16) comprising server systems (33, 38, 28) for the management of the infrastructure and the applications of the secure computer network system, this area being separate from the service area in which the file access mediator (25) is located and being accessible only by administrative personnel responsible for infrastructure management operations.

13. System according to the preceding claim, **characterized in that** the management area comprises a security management server system (28) connected to intrusion detector sensors (27) installed on communication lines of the secure computer network system (2) and having applications for reconstituting or tracking events by analyzing the logs of the gateway infrastructure and the data logging server systems (3a, 3b, 3c) as well as data transmitted by the intrusion detector sensors.

14. System according to Claim 12 or 13, **characterized in that** the management area comprises an infrastructure management server system (33) comprising a configuration register (57) in which is stored information concerning the logical and physical configuration of the secure computer network system, including the addresses of the mediators and of the server systems for value-added services.

15. System according to any one of the preceding claims, **characterized in that** the gateway infrastructure comprises a secure messaging server for sending electronic messages between users or for the transmission of protected data, the secure messaging server using private electronic keys of users' smart cards to encrypt the data transmitted.

16. System according to any one of the preceding claims, **characterized in that** it comprises one or more interconnection point server systems (5) connected on the one hand to the gateway infrastructures (2a, 2b) via the backbone network (4) and on the other hand to other networks or value-added services, the interconnection point server system comprising an external service mediator (30) acting as gateway between the secure computer network system and the other networks and comprising the functions of mutual authentication, format and protocol conversion and messaging relay.

17. System according to any one of the preceding claims, **characterized in that** it comprises application logs (55, 58, 59) for preserving a record of operations effected by one or more components of the system, the data processed by the application logs being the identification of the users participating in the operation, the nature of the operation, the identity of the documents concerned and a time stamp.

18. Method of management of data in a secure computer network system comprising at least one gateway infrastructure (2a, 2b) connected via a closed backbone communication network (4) to a plurality of data logging server systems (3a, 3b, 3c) situated on different sites, each data logging server system comprising at least one database (62) in which protected data constituting documents is stored, and a logging service technical mediator (29) for managing access to the documents stored in the database, the method comprising the creation and storage of said documents in document servers (40) situated in said data logging server systems, said documents constituting a file being distributed across different data logging server systems, the gateway infrastructure comprising at least one file access mediator in the form of a server system with applications that monitor and manage the access of users (6) to documents stored in the data logging server systems, **characterized in that** at the time of a document search request from an authorized user of the secure computer network system the search request is distributed by the file access mediator (25) to all the logging service technical mediators (29) and the rights of access based on access rights profiles at the level of each logging service technical mediator (29) are verified and at the time of consultation of a document the file access mediator (25) directly addresses the logging service technical mediator (29) concerned after the step of searching for the document and reverifies the access rights to the document relative to the user requesting the consultation before transmitting it to the user.

19. Method according to the preceding claim, **characterized in that** there is stored by means of an access profile management application (51) a profile defined by a user for access to the documents of their file in at least one of the data logging server systems (3a, 3b, 3c).

20. Method according to the preceding claim, **characterized in that** there is stored in each data logging server system in which documents of a file are stored access monitoring lists specifically associated with the stored documents and determining the access profile only for those documents.

21. Method according to either one of the preceding two claims, **characterized in that** there is stored information on the identities and the roles of the users of the secure computer network system in a directory of the server system in a high-security area of the gateway infrastructure, that directory being accessed by the access mediator (25) in order to determine, *inter alia,* the rights of access of the users according to their identity and their role.

22. Method according to any one of the preceding four claims, **characterized in that** at the time of the creation and storage of a document, by means of a validation application, the file access mediator verifies the conformance of the document format, syntax and attributes.
